# EUROPEAN PATENT APPLICATION

(11) **EP 4 475 575 A1**
(43) Date of publication of application: **11.12.2024**
(21) Application number: 23759086.4
(22) Date of filing: 16.02.2023
(51) Int. Cl.: H04W 4/70

(54) **SIDELINK MANAGEMENT METHOD, APPARATUS AND SYSTEM**

(30) Priority: 28.02.2022 CN 202210188443
(71) Applicant: Huawei Technologies Co., Ltd., Shenzhen, Guangdong 518129 (CN)
(72) Inventor: WU, Hao, Shenzhen, Guangdong 518129 (CN); XU, Haibo, Shenzhen, Guangdong 518129 (CN); PENG, Wenjie, Shenzhen, Guangdong 518129 (CN)
(74) Representative: Goddar, Heinz J.
(86) International application number: PCT/CN2023/076626
(87) International publication number: WO 2023/160461

(57) **Abstract**

Embodiments of this application provide a sidelink management method, an apparatus, and a system. The method includes: A first terminal device repeatedly sends first request information to a second terminal device via a plurality of first to-be-selected beams, where the first request information is used to trigger a connection to the second terminal device; the first terminal device receives first feedback information from the second terminal device via the plurality of first to-be-selected beams, where the first feedback information is used to provide feedback on the first request information; and the first terminal device determines a first beam based on the first feedback information, where the first beam is one of the plurality of first to-be-selected beams. The sidelink management method, the apparatus, and the system can less limit a link establishment distance between terminal devices, and improve a sidelink establishment success rate.

## Description

This application claims priority to Chinese Patent Application No. 202210188443.2, filed with the China National Intellectual Property Administration on February 28, 2022 and entitled "SIDELINK MANAGEMENT METHOD, APPARATUS, AND SYSTEM", which is incorporated herein by reference in its entirety.

### TECHNICAL FIELD

Embodiments of this application relate to the communication field, and in particular, to a sidelink management method, an apparatus, and a system.

### BACKGROUND

Some wireless communication systems may support communication between communication devices, for example, communication between a plurality of terminal devices. Such a communication manner is referred to as sidelink communication. Sidelink communication includes but is not limited to device-to-device (device-to-device, D2D) communication, proximity services (ProSe) communication, vehicle-to-everything (V2X) communication, a cellular V2X (C-V2X) communication system, and the like.

Before performing unicast communication, two terminal devices need to perform beam sweeping and establish beam pairing. In an existing sidelink system, before fine-granularity beam pairing is performed, only an omnidirectional beam is used for a unicast connection, which greatly limits a distance between terminal devices. Consequently, a sidelink establishment success rate is low.

### SUMMARY

Embodiments of this application provide a sidelink management method, an apparatus, and a system, to less limit a sidelink establishment distance between terminal devices, and improve a sidelink establishment success rate.

According to a first aspect, a sidelink management method is provided, and the method is performed by a first terminal device. The first terminal device repeatedly sends first request information to a second terminal device via a plurality of first to-be-selected beams, where the first request information is used to trigger a connection to the second terminal device; the first terminal device receives first feedback information from the second terminal device via the plurality of first to-be-selected beams, where the first feedback information is used to provide feedback on the first request information; and the first terminal device determines a first beam based on the first feedback information, where the first beam is one of the plurality of first to-be-selected beams.

The first terminal device repeatedly sends the first request information in a plurality of directions to form beam sweeping, so that the second terminal device can send the first feedback information via a beam with good received quality based on received quality of the first request information, and the first terminal device determines the first beam based on a receiving status of the first feedback information. Therefore, in a sidelink establishment process, the first terminal device can establish the connection to the second terminal device through beam sweeping, thereby improving a sidelink establishment success rate and an application scenario.

With reference to the first aspect, in some implementations of the first aspect, that the first terminal device repeatedly sends first request information to a second terminal device via a plurality of first to-be-selected beams includes one of the following operations: The first terminal device repeatedly sends the first request information to the second terminal device via the plurality of first to-be-selected beams by using a hybrid automatic repeat request (hybrid automatic repeat request, HARQ); the first terminal device repeatedly sends the first request information to the second terminal device via the plurality of first to-be-selected beams by using a packet data convergence protocol (packet data convergence protocol, PDCP); and the first terminal device repeatedly sends the first request information to the second terminal device via the plurality of first to-be-selected beams by using a PC5-S layer.

The first terminal device sends the first request information in different beam sending directions by using HARQ retransmission, PDCP repetition, and PC5-S retransmission to form beam sweeping, so that the second terminal device can select, based on the first request information sent in a sweeping manner, a beam whose received quality meets a preset condition as a beam used by the second terminal device for connecting to the first terminal device.

With reference to the first aspect, in some implementations of the first aspect, the method further includes: The first terminal device sends a quantity of the plurality of first to-be-selected beams to the second terminal device.

The first terminal device sends the quantity of first to-be-selected beams to the second terminal device, so that the second terminal device can receive the first request information based on the quantity of second to-be-selected beams, quickly traverse all combinations of transmit and receive beams, and select a beam whose received quality meets a preset condition as a beam for communication with the first terminal device, thereby improving communication quality after the sidelink is established.

With reference to the first aspect, in some implementations of the first aspect, the first request information further includes indication information of the first to-be-selected beam carrying the first request information, and the first feedback information further includes indication information indicating the first beam.

When sending the first request information via the plurality of first to-be-selected beams, the first terminal device also indicates, by using the first request information, the first to-be-selected beam carrying the first request information, so that when determining a receive beam whose received quality meets a preset condition, the second terminal device can also determine a first to-be-selected beam corresponding to the receive beam, and indicate the first to-be-selected beam by using the first feedback information, and after successfully decoding the first feedback information, the first terminal device can use, without selecting the first beam through comparison, the first to-be-selected beam indicated by the first feedback information as the first beam. This reduces overheads of the first terminal device, and increases a sidelink establishment speed.

With reference to the first aspect, in some implementations of the first aspect, received quality of the first feedback information corresponding to the first beam is greater than a first threshold.

The first terminal device measures the first feedback information. When receiving the first feedback information via the first to-be-selected beam, after obtaining the first to-be-selected beam whose received quality is greater than the first threshold, the first terminal device may stop receiving and measuring the first feedback information carried on a remaining first to-be-selected beam. This can quickly complete coarse-granularity beam pairing, and reduce sweeping and measurement overheads of the first terminal device.

Alternatively, the first terminal device measures the first feedback information. When receiving the first feedback information via the first to-be-selected beam, the first terminal device may select any one of a plurality of first to-be-selected beams whose received quality is greater than the first threshold as the first beam. This can complete coarse-granularity beam pairing.

With reference to the first aspect, in some implementations of the first aspect, the received quality of the first feedback information corresponding to the first beam is highest in received quality of the first feedback information corresponding to the plurality of first to-be-selected beams.

When measuring the first feedback information, the first terminal device may measure, via all the first to-be-selected beams, the first feedback information carried on a second beam of the second terminal device, and select, through comparison, the first to-be-selected beam with highest received quality as the first beam, where the received quality of the first beam is also greater than the first threshold. In this technical solution, a beam with best communication quality is selected as the first beam. This can improve quality of communication between the first terminal device and the second terminal device after a link is established.

With reference to the first aspect, in some implementations of the first aspect, the method further includes: The first terminal device sends resource indication information to the second terminal device, where the resource indication information indicates a dedicated resource.

In embodiments of this application, a manner of transmitting both a reference signal and data is not used. A first reference signal is sent by using the dedicated resource in this application, so that beam pairing is more convenient, and is not affected by data transmission, a beam pairing speed is increased, and sidelink communication efficiency is improved. The dedicated resource may be a periodic resource or an aperiodic resource.

With reference to the first aspect, in some implementations of the first aspect, the method further includes: The first terminal device sends the first reference signal to the second terminal device on the dedicated resource based on the first beam via a plurality of third to-be-selected beams; and the first terminal device receives a measurement report from the second terminal device, where the measurement report indicates received quality of the first reference signal and a corresponding third to-be-selected beam.

The first terminal device sends the first reference signal to the second terminal device based on the first beam via the plurality of third to-be-selected beams, determines a third beam from the third to-be-selected beams based on the measurement report obtained by the second terminal device after the second terminal device receives the first reference signal, and obtains the third beam with a finer granularity than that of the first beam. This can obtain better communication quality after the sidelink between the first terminal device and the second terminal device is established.

With reference to the first aspect, in some implementations of the first aspect, the method further includes: The first terminal device determines the third beam based on the measurement report, where the third beam is one of the plurality of third to-be-selected beams.

The first terminal device selects an appropriate third to-be-selected beam as the third beam based on a specific preset condition and the measurement report received from the second terminal device, and determines a fine-granularity beam of the first terminal device as a beam used when the first terminal device communicates with the second terminal device.

In some embodiments, the first terminal device selects a third to-be-selected beam with highest received quality as the third beam based on the measurement report, to obtain better communication quality.

In some other embodiments, the first terminal device randomly determines, as the third beam based on the measurement report, one from the plurality of third to-be-selected beams whose received quality meets a threshold.

With reference to the first aspect, in some implementations of the first aspect, the resource of the first reference signal is a periodic resource.

In embodiments of this application, the first terminal device may send the resource indication information to the second terminal device, where the resource is the dedicated resource and is periodically configured, so that the second terminal device can more conveniently receive the resource indication information and the corresponding reference signal, and quickly perform beam pairing on the sidelink.

With reference to the first aspect, in some implementations of the first aspect, before the first terminal device repeatedly sends first request information to a second terminal device via a plurality of first to-be-selected beams, the method further includes: The first terminal device obtains the plurality of first to-be-selected beams.

In this embodiment, the plurality of first to-be-selected beams used by the first terminal device to send the first request information may be all beams of the first terminal device, or may be some beams of the first terminal device. Before that, the first terminal device may further determine the plurality of first to-be-selected beams from more beams. This improves efficiency of a unicast connection.

For example, the first terminal device may send a third reference signal (which may be an SSB signal) and determine the plurality of first to-be-selected beams based on feedback information of a plurality of other terminal devices that receive the third reference signal (which is specifically described below); the first terminal device may periodically sweep a reference signal (which may be an SSB signal) sent by another terminal device and determine the plurality of first to-be-selected beams based on received quality; or the first terminal device may determine the plurality of first to-be-selected beams in another manner, for example, pre-knowing a location of a surrounding terminal device. Details are not described herein again.

With reference to the first aspect, in some implementations of the first aspect, that the first terminal device obtains the plurality of first to-be-selected beams includes: The first terminal device obtains an n^{th} resource configuration parameter, where the n^{th} resource configuration parameter includes an n^{th} quantity threshold Hₙ, and n is a positive integer; the first terminal device sends a third reference signal based on the n^{th} resource configuration parameter via Bₙ beams; the first terminal device receives second feedback information from a plurality of terminal devices, where the second feedback information indicates Aₙ beams, the Aₙ beams belong to the Bₙ beams, and received quality of the Aₙ beams is greater than or equal to a received quality threshold; and the first terminal device determines the plurality of first to-be-selected beams based on a quantity relationship between Aₙ and Hₙ.

In this embodiment, the first terminal device determines the plurality of first to-be-selected beams. Specifically, the first terminal device may send the third reference signal based on the n^{th} configuration parameter, determine the Aₙ beams based on the information fed back by the plurality of terminal devices, and determine the plurality of first to-be-selected beams based on the quantity relationship between Aₙ and Hₙ.

If n is 1, the first terminal device may determine the plurality of first to-be-selected beams based on a quantity relationship between A₁ and Hi. Alternatively, if n is greater than or equal to 2, the first terminal device may determine the plurality of first to-be-selected beams based on the quantity relationship between Aₙ and Hₙ. Before the first terminal device determines the plurality of first to-be-selected beams based on the quantity relationship between Aₙ and Hₙ, the first terminal device may separately send reference signals based on a first resource configuration parameter to an (n-1)^{th} resource configuration parameter, and the quantity relationship between A₁ and H₁ to a quantity relationship between Aₙ₋₁ and Hₙ₋₁ meet a specific condition.

In addition, the second feedback information may indicate the Aₙ beams in an explicit or implicit manner. In the explicit manner, a beam index, an ID, a resource, and the like are directly indicated in the second feedback information. In the implicit manner, a beam is indicated by using a feedback resource location of the second feedback information.

With reference to the first aspect, in some implementations of the first aspect, that the first terminal device determines the plurality of first to-be-selected beams based on a quantity relationship between Aₙ and Hₙ includes: When Aₙ≥Hₙ, the first terminal device determines the Aₙ beams as the plurality of first to-be-selected beams.

In this embodiment, when Aₙ≥Hₙ, it means that communication quality of the Aₙ beams is good and a quantity of Aₙ beams meets a condition. This may be because there is another terminal device in a direction of the Aₙ beams, and the first terminal device may send DCR information via the Aₙ beams as the plurality of first to-be-selected beams to perform a unicast connection with the another terminal device (for example, the second terminal device). Because a beam in a direction without a terminal device may be removed, efficiency of the unicast connection can be improved. In addition, when the quantity of selected beams exceeds Hₙ, it may be avoided that an appropriate beam cannot be selected during the subsequent unicast connection due to selection of a small quantity of beams (received quality of some beams may be poor in a short time due to a short-time obstacle or movement of the terminal device).

With reference to the first aspect, in some implementations of the first aspect, that the first terminal device determines the plurality of first to-be-selected beams based on a quantity relationship between Aₙ and Hₙ includes: When Aₙ<Hₙ, the first terminal device determines the Bₙ beams as the plurality of first to-be-selected beams.

In this embodiment, if Aₙ<Hₙ, and a quantity of beams with good received quality is less than a threshold, the first terminal device may send DCR information via the Bₙ beams for sending the third reference signal as the plurality of first to-be-selected beams. That a quantity of beams with good received quality is less than a threshold may be caused by movement of the terminal device. For example, a reference signal sending periodicity and a receiving periodicity do not match, and consequently received quality of some beams is very poor. Alternatively, received quality of beams is dynamically changed due to movement of the terminal device. In this case, the DCR information is sent via the Bₙ beams instead of the small quantity of Aₙ beams. This helps select a better beam during the unicast connection, and improve quality of subsequent communication.

With reference to the first aspect, in some implementations of the first aspect, that the first terminal device determines the plurality of first to-be-selected beams based on a quantity relationship between Aₙ and Hₙ includes: When Aₙ<Hₙ, the first terminal device obtains an (n+1)^{th} resource configuration parameter, and determines the plurality of first to-be-selected beams based on the (n+1)^{th} resource configuration parameter, where the n^{th} resource configuration parameter includes an n^{th} periodicity, an n^{th} interval, and an n^{th} resource, the (n+1)^{th} resource configuration parameter includes an (n+1)^{th} periodicity, an (n+1)^{th} interval, and an (n+1)^{th} resource, the n^{th} periodicity, the n^{th} interval, and the n^{th} resource are respectively a sending periodicity of the third reference signal, a sending interval of the third reference signal in one sending periodicity, and a sending resource of the third reference signal that are configured in the n^{th} resource configuration parameter, the (n+1)^{th} periodicity, the (n+1)^{th} interval, and the (n+1)^{th} resource are respectively a sending periodicity of the third reference signal, a sending interval of the third reference signal in one sending periodicity, and a sending resource of the third reference signal that are configured in the (n+1)^{th} resource configuration parameter, and the (n+1)^{th} resource configuration parameter meets at least one of the following: the (n+1)^{th} periodicity is shorter than the n^{th} periodicity; and the (n+1)^{th} resource is less than the n^{th} resource.

In this embodiment, when Aₙ<Hₙ, the first terminal device may obtain the (n+1)^{th} resource configuration parameter, so that the first terminal device can continue to send a reference signal based on the (n+1)^{th} resource configuration parameter, and determine Aₙ₊₁ beams whose received quality is greater than the threshold. That a quantity of beams with good received quality obtained by the first terminal device based on the n^{th} resource configuration parameter is less than a preset threshold may be caused because the sending periodicity of the third reference signal and a receiving periodicity do not match or the sending interval and a receiving interval of the third reference signals carried on different transmit beams in a same sending periodicity do not match. When the (n+1)^{th} periodicity is shorter than the n^{th} periodicity or the (n+1)^{th} interval is shorter than the n^{th} interval, that is, the sending periodicity of the reference signal or the sending interval of the reference signal in a same periodicity is reduced, more beams whose received quality is greater than the preset threshold may be obtained, so that the beams are used for the subsequent unicast connection.

When the (n+1)^{th} resource is less than the n^{th} resource, a first network device reduces a resource configured to the first terminal device for sending a reference signal. In this way, the first terminal device can form a smaller quantity of beams through beamforming, and a coverage area of a single beam increases. Based on the (n+1)^{th} resource configuration parameter, even if the quantity of beams whose received quality is greater than the preset threshold remains unchanged or decreases, a beam with good quality is easily found during the unicast connection.

With reference to the first aspect, in some implementations of the first aspect, that the first terminal device obtains an (n+1)^{th} resource configuration parameter includes: When Aₙ<Hₙ, the first terminal device sends request information to the first network device, where the request information is used to obtain the (n+1)^{th} resource configuration parameter; and the first terminal device receives the (n+1)^{th} resource configuration parameter from the first network device; or the first terminal device obtains the (n+1)^{th} resource configuration parameter from a resource configuration list received from the first network device, where the resource configuration list includes the n^{th} resource configuration parameter and the (n+1)^{th} resource configuration parameter.

In this embodiment, a plurality of resource configuration parameters that are used by the first terminal device and that include the n^{th} resource configuration parameter and the (n+1)^{th} resource configuration parameter may be set in the resource configuration list. The resource configuration list may be received from the first network device before the first terminal device sends the third reference signal for the first time. The plurality of resource configuration parameters may be arranged in the resource configuration list according to a specific rule, so that when a quantity of beams with good received quality obtained by the first terminal device based on a resource configuration parameter is less than the threshold, a next resource configuration parameter can be conveniently obtained from the list. This reduces signaling interaction between the first terminal device and the first network device, and improves convenience.

Alternatively, the first terminal device may send the request information to the first network device each time when the first terminal device needs to obtain a resource configuration parameter. In this way, the resource configuration parameter is obtained based on a requirement, and a resource waste caused by pre-configuration is reduced.

With reference to the first aspect, in some implementations of the first aspect, the plurality of terminal devices include the second terminal device.

According to a second aspect, a sidelink management method is provided, and includes: A first terminal device obtains an n^{th} resource configuration parameter, where the n^{th} resource configuration parameter includes an n^{th} quantity threshold Hₙ; the first terminal device sends a third reference signal based on the n^{th} resource configuration parameter via Bₙ beams; the first terminal device receives second feedback information from a plurality of terminal devices, where the second feedback information indicates Aₙ beams, the Aₙ beams belong to the Bₙ beams, and received quality of the Aₙ beams is greater than or equal to a received quality threshold; and when Aₙ<Hₙ, the first terminal device sends first request information to a second terminal device via an omnidirectional beam, where the first request information is used to trigger a connection to the second terminal device.

In this embodiment, the first terminal device may send the third reference signal, and determine the Aₙ beams based on the feedback information received after the plurality of terminal devices receive the third reference signal, where the received quality of the Aₙ beams is greater than the received quality threshold. There may be other terminal devices in directions of the Aₙ beams, so that received quality of beams in corresponding directions fed back by these terminal devices is good. If the quantity Aₙ of beams whose received quality is greater than the threshold is excessively small, when these beams are used to perform the unicast connection (sending the first request information), the unicast connection may fail. In this case, the unicast connection performed via the omnidirectional beam can improve a subsequent unicast connection success rate.

When n=1, the first terminal device may perform the subsequent unicast connection via the omnidirectional beam when A₁ (obtained by sending the reference signal for the first time)<Hi. If n≥2, the first terminal device may perform the unicast connection via the omnidirectional beam only when Aₙ (obtained by sending the reference signal for the n^{th} time)<Hₙ, and when a quantity of beams, whose received quality is higher than the preset threshold, obtained by sending the reference signal for first to (n-1)^{th} times is small, obtain a next resource configuration parameter for another try.

According to a third aspect, a sidelink management method is provided, and the method is performed by a second terminal device. The method includes: The second terminal device receives first request information from a first terminal device via a plurality of second to-be-selected beams, where the first request information is used by the first terminal device to trigger a connection to the second terminal device; the second terminal device determines a second beam based on the first request information, where the second beam is one of the plurality of second to-be-selected beams; and the second terminal device sends first feedback information to the first terminal device via the second beam, where the first feedback information is used to provide feedback on the first request information.

The second terminal device receives, via the plurality of second to-be-selected beams, the first request information sent by the first terminal device in a plurality of directions, measures the request information, and determines the second beam from the second to-be-selected beams based on a measurement result. In addition, the second beam is reused to send the first feedback information to the first terminal device, so that the first terminal device determines a first beam based on the first feedback information, and the first terminal device and the second terminal device each can determine a beam whose received quality meets a specific condition as a sidelink communication beam. This improves sidelink communication quality.

With reference to the third aspect, in some implementations of the third aspect, the first request information is sent by the first terminal device via a plurality of first to-be-selected beams, and the method further includes: The second terminal device receives a quantity of the plurality of first to-be-selected beams from the first terminal device; and that the second terminal device receives first request information from a first terminal device via a plurality of second to-be-selected beams includes: The second terminal device receives the first request information corresponding to the plurality of first to-be-selected beams from the first terminal device based on the quantity of the plurality of first to-be-selected beams via the plurality of second to-be-selected beams.

With reference to the third aspect, in some implementations of the third aspect, the first request information further includes indication information of the first to-be-selected beam carrying the first request information, the first feedback information further includes indication information of a first beam, and the first beam is one of the plurality of first to-be-selected beams.

With reference to the third aspect, in some implementations of the third aspect, received quality of the first request information corresponding to the second beam is greater than a second threshold.

With reference to the third aspect, in some implementations of the third aspect, the received quality of the first request information corresponding to the second beam is highest in received quality of the first request information corresponding to the plurality of second to-be-selected beams.

With reference to the third aspect, in some implementations of the third aspect, the method further includes: The second terminal device receives resource indication information from the first terminal device, where the resource indication information indicates a dedicated resource.

With reference to the third aspect, in some implementations of the third aspect, the method further includes: The second terminal device receives from the first terminal device on the dedicated resource via the second beam, a first reference signal sent via a plurality of third to-be-selected beams; and the second terminal device sends a measurement report to the first terminal device, where the measurement report indicates received quality of the first reference signal and a corresponding third to-be-selected beam.

With reference to the third aspect, in some implementations of the third aspect, before the second terminal device receives first request information from a first terminal device via a plurality of second to-be-selected beams, the method further includes: The second terminal device receives third reference signals carried on Bₙ beams of the first terminal device, where the Bₙ beams are determined by the first terminal device based on an n^{th} resource configuration parameter; and the second terminal device sends feedback information to the first terminal device, where the feedback information indicates a beam whose received quality is greater than or equal to a received quality threshold in the Bₙ beams, and the plurality of first to-be-selected beams include a beam whose received quality is greater than or equal to the received quality threshold.

According to a fourth aspect, a sidelink management method is provided, and includes: A second terminal device receives third reference signals carried on Bₙ beams of a first terminal device, where the Bₙ beams are determined by the first terminal device based on an n^{th} resource configuration parameter; the second terminal device sends feedback information to the first terminal device, where the feedback information indicates a beam whose received quality is greater than or equal to a received quality threshold in the Bₙ beams; and the second terminal device receives first request information carried on a plurality of first to-be-selected beams of the first terminal device, where the first request information is used to trigger a connection to the second terminal device, and the plurality of first to-be-selected beams include a beam whose received quality is greater than or equal to the received quality threshold.

According to a fifth aspect, a sidelink management apparatus is provided, and includes: a transceiver unit, configured to repeatedly send first request information to a second terminal device via a plurality of first to-be-selected beams, where the first request information is used to trigger a connection to the second terminal device; and the transceiver unit is further configured to receive first feedback information from the second terminal device via the plurality of first to-be-selected beams, and the first feedback information is used to provide feedback on the first request information; and a processing unit, where the processing unit is configured to determine a first beam based on the first feedback information, and the first beam is one of the plurality of first to-be-selected beams.

In embodiments of this application, the transceiver unit in the apparatus repeatedly sends the first request information to the second terminal device via the plurality of first to-be-selected beams, to trigger the connection to the second terminal device, and enables the second terminal device to determine a beam with good received quality based on the first request information, and receive the first feedback information sent by the second terminal device. The processing unit determines the first beam from the first to-be-selected beams based on the first feedback information, so that the first terminal device and the second terminal device can obtain transmit and receive beams with good communication quality. This improves sidelink communication quality.

With reference to the fifth aspect, in some implementations of the fifth aspect, the processing unit is specifically configured to perform one of the following operations: repeatedly sending the first request information to the second terminal device via the plurality of first to-be-selected beams by using a HARQ; repeatedly sending the first request information to the second terminal device via the plurality of first to-be-selected beams by using a PDCP; and repeatedly sending the first request information to the second terminal device via the plurality of first to-be-selected beams by using a PC5-S layer.

With reference to the fifth aspect, in some implementations of the fifth aspect, the transceiver unit is further configured to: send a quantity of the plurality of first to-be-selected beams to the second terminal device.

With reference to the fifth aspect, in some implementations of the fifth aspect, the first request information further includes indication information of the first to-be-selected beam carrying the first request information, and the first feedback information further includes indication information of the first beam.

With reference to the fifth aspect, in some implementations of the fifth aspect, received quality of the first feedback information corresponding to the first beam is greater than a first threshold.

With reference to the fifth aspect, in some implementations of the fifth aspect, the received quality of the first feedback information corresponding to the first beam is highest in received quality of the first feedback information corresponding to the plurality of first to-be-selected beams.

With reference to the fifth aspect, in some implementations of the fifth aspect, the transceiver unit is further configured to: send resource indication information to the second terminal device, where the resource indication information indicates a dedicated resource.

With reference to the fifth aspect, in some implementations of the fifth aspect, the transceiver unit is further configured to: send a first reference signal to the second terminal device on the dedicated resource based on the first beam via a plurality of third to-be-selected beams; and receive a measurement report from the second terminal device. The processing unit is further configured to determine a third beam based on the measurement report, where the measurement report indicates received quality of the first reference signal and a corresponding third to-be-selected beam.

With reference to the fifth aspect, in some implementations of the fifth aspect, the processing unit is further configured to determine the third beam based on the measurement report, where the third beam is one of the plurality of third to-be-selected beams.

With reference to the fifth aspect, in some implementations of the fifth aspect, the processing unit is further configured to: obtain the plurality of first to-be-selected beams.

With reference to the fifth aspect, in some implementations of the fifth aspect, the processing unit is specifically configured to: obtain an n^{th} resource configuration parameter, where the n^{th} resource configuration parameter includes an n^{th} quantity threshold Hₙ, and n is a positive integer; send a third reference signal based on the n^{th} resource configuration parameter via Bₙ beams; receive second feedback information from a plurality of terminal devices, where the second feedback information indicates Aₙ beams, the Aₙ beams belong to the Bₙ beams, and received quality of the Aₙ beams is greater than or equal to a received quality threshold; and determine the plurality of first to-be-selected beams based on a quantity relationship between Aₙ and Hₙ.

With reference to the fifth aspect, in some implementations of the fifth aspect, the processing unit is specifically configured to: when Aₙ≥Hₙ, determine the Aₙ beams as the plurality of first to-be-selected beams.

With reference to the fifth aspect, in some implementations of the fifth aspect, the processing unit is specifically configured to: when Aₙ<Hₙ, determine the Bₙ beams as the plurality of first to-be-selected beams.

With reference to the fifth aspect, in some implementations of the fifth aspect, the processing unit is specifically configured to: when Aₙ<Hₙ, the first terminal device obtains an (n+1)^{th} resource configuration parameter, and determines the plurality of first to-be-selected beams based on the (n+1)^{th} resource configuration parameter, where the n^{th} resource configuration parameter includes an n^{th} periodicity, an n^{th} interval, and an n^{th} resource, the (n+1)^{th} resource configuration parameter includes an (n+1)^{th} periodicity, an (n+1)^{th} interval, and an (n+1)^{th} resource, the n^{th} periodicity, the n^{th} interval, and the n^{th} resource are respectively a sending periodicity of the third reference signal, a sending interval of the third reference signal in one sending periodicity, and a sending resource of the third reference signal that are configured in the n^{th} resource configuration parameter, the (n+1)^{th} periodicity, the (n+1)^{th} interval, and the (n+1)^{th} resource are respectively a sending periodicity of the third reference signal, a sending interval of the third reference signal in one sending periodicity, and a sending resource of the third reference signal that are configured in the (n+1)^{th} resource configuration parameter, and the (n+1)^{th} resource configuration parameter meets at least one of the following: the (n+1)^{th} periodicity is shorter than the n^{th} periodicity; the (n+1)^{th} interval is shorter than the n^{th} interval; and the (n+1)^{th} resource is less than the n^{th} resource.

With reference to the fifth aspect, in some implementations of the fifth aspect, the processing unit is specifically configured to: when Aₙ<Hₙ, the first terminal device sends request information to a first network device, where the request information is used to obtain the (n+1)^{th} resource configuration parameter; and receives the (n+1)^{th} resource configuration parameter from the first network device; or obtains the (n+1)^{th} resource configuration parameter from a resource configuration list received from the first network device, where the resource configuration list is received from the first network device when the first terminal device obtains a first resource configuration parameter; and the resource configuration list includes the n^{th} resource configuration parameter and the (n+1)^{th} resource configuration parameter.

With reference to the fifth aspect, in some implementations of the fifth aspect, the plurality of terminal devices include the second terminal device.

According to a sixth aspect, a sidelink management apparatus is provided, and includes: a processing unit, configured to obtain an n^{th} resource configuration parameter, where the n^{th} resource configuration parameter includes an n^{th} quantity threshold H1; and a transceiver unit, configured to send a third reference signal based on the n^{th} resource configuration parameter via Bₙ beams, where the transceiver unit is further configured to receive second feedback information from a plurality of terminal devices, the second feedback information indicates Aₙ beams, the Aₙ beams belong to the Bₙ beams, and received quality of the Aₙ beams is greater than or equal to a received quality threshold; and the transceiver unit is further configured to: when A₁<H1, the first terminal device sends first request information to a second terminal device via an omnidirectional beam, the first request information is used to trigger a connection to the second terminal device, and the second terminal device belongs to the plurality of terminal devices.

According to a seventh aspect, a sidelink management apparatus is provided, and includes: a transceiver unit, configured to receive first request information from a first terminal device via a plurality of second to-be-selected beams, where the first request information is used by the first terminal device to trigger a connection to the apparatus; and a processing unit, configured to determine a second beam based on the first request information, where the second beam is one of the plurality of second to-be-selected beams; and the transceiver unit is further configured to send first feedback information to the first terminal device via the second beam, and the first feedback information is used to provide feedback on the first request information.

In embodiments of this application, the transceiver unit receives the first request information from the first terminal device via the plurality of second to-be-selected beams, and the processing unit determines the second beam based on the first request information. The transceiver unit sends the first feedback information to the first terminal device, so that the first terminal device can also determine, based on the first feedback information, a beam with good received quality. This improves sidelink communication quality.

With reference to the seventh aspect, in some implementations of the seventh aspect, the first request information is sent by the first terminal device via a plurality of first to-be-selected beams, and the transceiver unit is further configured to: receive a quantity of the plurality of first to-be-selected beams from the first terminal device, where the receiving first request information from a first terminal device via a plurality of second to-be-selected beams includes: receiving the first request information corresponding to the plurality of first to-be-selected beams from the first terminal device based on the quantity of the plurality of first to-be-selected beams via the plurality of second to-be-selected beams.

With reference to the seventh aspect, in some implementations of the seventh aspect, the first request information further includes indication information of the first to-be-selected beam carrying the first request information, the first feedback information further includes indication information of a first beam, and the first beam is one of the plurality of first to-be-selected beams.

With reference to the seventh aspect, in some implementations of the seventh aspect, received quality of the first request information corresponding to the second beam is greater than a second threshold.

With reference to the seventh aspect, in some implementations of the seventh aspect, the received quality of the first request information corresponding to the second beam is highest in received quality of the first request information corresponding to the plurality of second to-be-selected beams.

With reference to the seventh aspect, in some implementations of the seventh aspect, the transceiver unit is further configured to: receive resource indication information from the first terminal device, where the resource indication information indicates a dedicated resource.

With reference to the seventh aspect, in some implementations of the seventh aspect, the transceiver unit in the apparatus is further configured to: receive, from the first terminal device on the dedicated resource via the second beam, a first reference signal sent via a plurality of third to-be-selected beams; and send a measurement report to the first terminal device, where the measurement report indicates received quality of the first reference signal and a corresponding third to-be-selected beam.

With reference to the seventh aspect, in some implementations of the seventh aspect, the transceiver unit is further configured to: receive third reference signals carried on Bₙ beams of the first terminal device, where the Bₙ beams are determined by the first terminal device based on an n^{th} resource configuration parameter; and send feedback information to the first terminal device, where the feedback information indicates a beam whose received quality is greater than or equal to a received quality threshold in the Bₙ beams, and the plurality of first to-be-selected beams include a beam whose received quality is greater than or equal to the received quality threshold.

According to an eighth aspect, a sidelink management apparatus is provided, and includes: a transceiver unit, configured to: receive third reference signals carried on Bₙ beams of a first terminal device, where the Bₙ beams are determined by the first terminal device based on an n^{th} resource configuration parameter; send feedback information to the first terminal device, where the feedback information indicates a beam whose received quality is greater than or equal to a received quality threshold in the Bₙ beams; and receive first request information carried on a plurality of first to-be-selected beams of the first terminal device, where the first request information is used to trigger a connection to the second terminal device, and the plurality of first to-be-selected beams include a beam whose received quality is greater than or equal to the received quality threshold.

According to a ninth aspect, a communication apparatus is provided, and includes a processor and a communication interface. The communication interface is configured to: receive a signal from a communication apparatus other than the communication apparatus and transmit the signal to the processor, or send a signal from the processor to a communication apparatus other than the communication apparatus; and the processor is configured to implement, by using a logic circuit or executing code instructions, the method according to the first aspect or any implementation of the first aspect, the second aspect, the third aspect or any implementation of the third aspect, and the fourth aspect.

According to a tenth aspect, a communication system is provided, and includes the apparatus according to the fifth aspect or any implementation of the fifth aspect, the sixth aspect, the seventh aspect or any implementation of the seventh aspect, and the eighth aspect.

According to an eleventh aspect, a chip is provided, and includes: a processor, configured to invoke a computer program from a memory and run the computer program, so that a terminal device in which the chip is installed performs the method according to the first aspect or any implementation of the first aspect, the terminal device in which the chip is installed performs the method according to the second aspect, the terminal device in which the chip is installed performs the method according to the third aspect or any implementation of the third aspect, and/or the terminal device in which the chip is installed performs the method according to the fourth aspect.

According to a twelfth aspect, a computer-readable storage medium is provided. The computer-readable storage medium stores a computer program, and when the computer program runs, a computer is enabled to perform the method according to the first aspect or any implementation of the first aspect; the computer is enabled to perform the method according to the second aspect; the computer is enabled to perform the method according to the third aspect or any implementation of the third aspect; or the computer is enabled to perform the method according to the fourth aspect.

According to a thirteenth aspect, a computer program product is provided. The computer program product includes computer program code, and when the computer program code is run, the method according to the first aspect or any implementation of the first aspect is implemented, the method according to the second aspect is implemented, the method according to the second aspect or any implementation of the second aspect is implemented, or the method according to the second aspect is implemented.

### BRIEF DESCRIPTION OF DRAWINGS

FIG. 1 is a diagram of an architecture of a communication system to which an embodiment of this application is applicable;
FIG. 2 is a diagram of sidelink control plane protocol stacks based on an NR PC5 interface;
FIG. 3 is a schematic flowchart of a sidelink management method according to an embodiment of this application;
FIG. 4 is a schematic flowchart of a sidelink management method according to an embodiment of this application;
(a) in FIG. 5 is a diagram of a dedicated resource configuration according to an embodiment of this application;

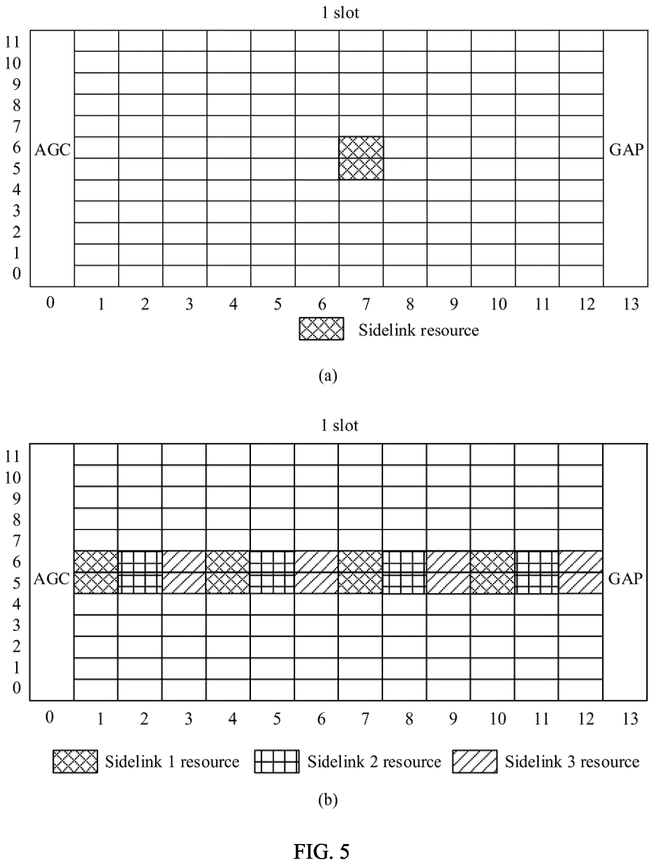

(b) in FIG. 5 is a diagram of another dedicated resource configuration according to an embodiment of this application;

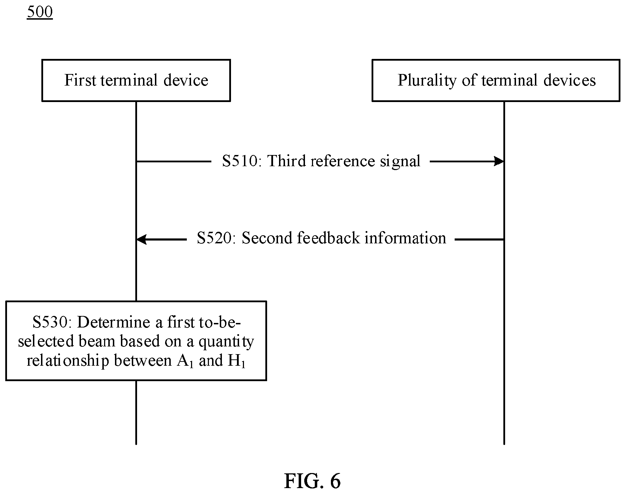

FIG. 6 is a schematic flowchart of a sidelink management method according to an embodiment of this application;

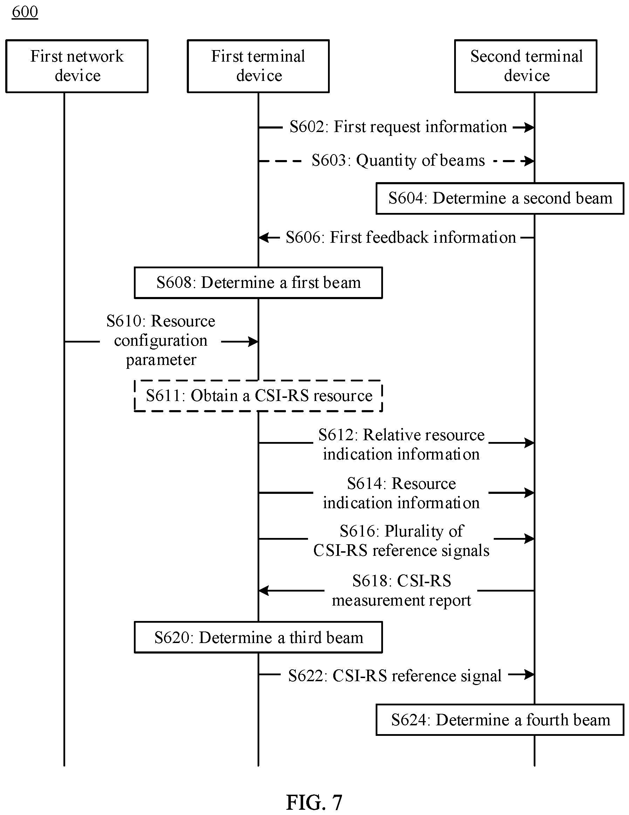

FIG. 7 is a schematic flowchart of a sidelink management method according to an embodiment of this application;

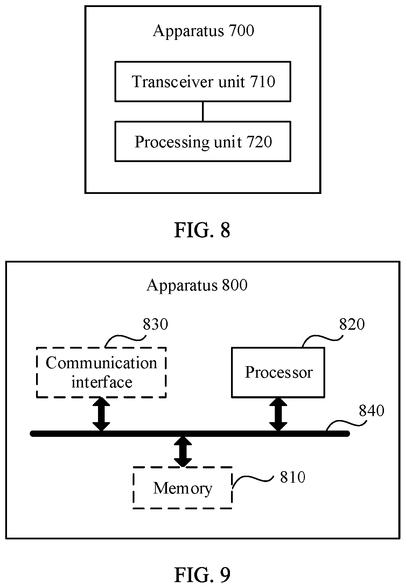

FIG. 8 is a block diagram of a sidelink management apparatus according to an embodiment of this application; and
FIG. 9 is a block diagram of another sidelink management apparatus according to an embodiment of this application.

### DESCRIPTION OF EMBODIMENTS

The following describes technical solutions in embodiments in this application with reference to accompanying drawings.

The technical solutions in embodiments of this application are applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability microwave access (worldwide interoperability for microwave access, WiMAX) communication system, a future 5th generation (5th generation, 5G) system, new radio (new radio, NR), or vehicle-to-X (vehicle-to-X, V2X), where V2X may include vehicle-to-internet (vehicle-to-network, V2N), vehicle-to-vehicle (vehicle-to-Vehicle, V2V), vehicle-to-infrastructure (vehicle-to-infrastructure, V2I), vehicle-to-pedestrian (vehicle-to-pedestrian, V2P), or a V2X system based on an enhanced proximity services (proximity services, ProSe), a long term evolution-vehicle (long term evolution-vehicle, LTE-V), internet of vehicles, machine type communication (machine type communication, MTC), internet of things (internet of things, IoT), long term evolution-machine (long term evolution-machine, LTE-M), machine-to-machine (machine-to-machine, M2M), a non-terrestrial network (non-terrestrial network, NTN) system, or another future evolved communication system.

To facilitate understanding of embodiments of this application, terms used in this application are first briefly described.

### 1. A broadcast or multicast communication manner on a sidelink

Broadcast or multicast on the sidelink means that broadcast or multicast data sent by a terminal device may be received by one or more terminal devices. For example, when service data is transmitted on a PC5 interface, a used destination layer-2 identifier (Destination Layer-2 ID) is predefined. A sending device may directly send the broadcast service data through a user plane protocol stack, and fill, at a media access control (media access control protocol, MAC) layer and/or a physical (physical, PHY) layer, the destination layer-2 ID corresponding to a broadcast service. A terminal device interested in the broadcast service may monitor, at the PHY layer, whether there is the service data of the destination layer-2 ID corresponding to the broadcast service, and receive and parse the service data. However, this application is not limited thereto.

### 2. A unicast communication manner on a sidelink

Unicast is a one-to-one communication manner of terminal devices. A sending device indicates, according to a destination address, a receiving device of unicast data that is sent by the sending device. The receiving device determines, according to the destination address of the unicast data, whether the unicast data is sent to the receiving device, and determines, based on a source address of the unicast data, a specific device that sends the unicast data. Optionally, two terminal devices may establish a unicast connection between the two devices by signaling interaction. Unicast communication may be performed after the unicast connection is established.

### 3. Sidelink transmission mode 1 (mode 1)

The sidelink mode 1 means that a terminal device determines, based on a sidelink scheduling grant (sidelink grant) sent by a network device, a resource for sending sidelink data. The sidelink scheduling grant is used to grant the terminal device a dedicated resource for sending the sidelink data. For example, before sending a sidelink, the terminal device reports a buffer status report (buffer status report, BSR) to the network device, to notify the network device of a data amount to be sent. The network device grants, based on the data amount reported by the terminal device, a corresponding resource to the terminal device.

### 4. Sidelink transmission mode 2 (mode 2)

The sidelink mode 2 means that a network device pre-allocates a sidelink resource for contention, and a plurality of terminal devices may content for a resource in the sidelink resource for contention. When obtaining the resource through contention, the terminal device may send sidelink data on the resource obtained through contention. For example, the terminal device selects, based on measuring whether each time-frequency resource in the sidelink resource is occupied, an unoccupied resource for transmission. However, this application is not limited thereto.

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

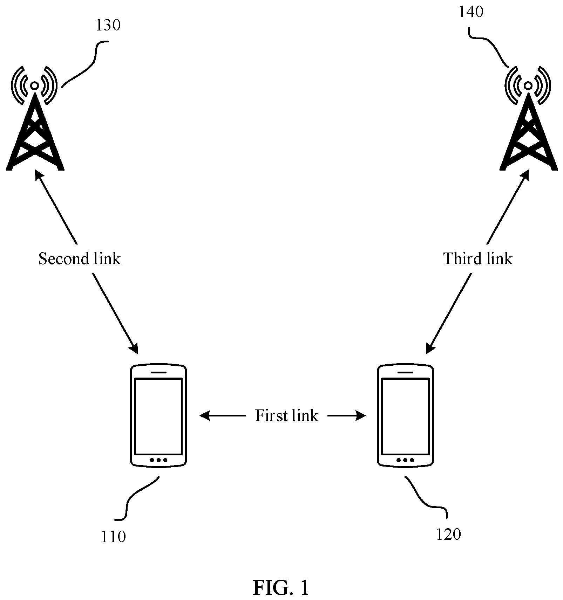

FIG. 1 is a diagram of an architecture of a communication system to which an embodiment of this application is applicable.

As shown in FIG. 1, the communication system includes a terminal device and a network device. The terminal device communicates with the network device through an uplink or a downlink, and there may be a sidelink between the terminal devices. For example, the communication system may include a first terminal device 110, a second terminal device 120, a first network device 130, and a second network device 140. The first terminal device 110 communicates with the first network device 130 through a second link, the second terminal device 120 communicates with the second network device 140 through a third link, the first terminal device 110 communicates with the second terminal device 120 through a first link, and the first link is a sidelink.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a device configured to communicate with a terminal device. The network device may be a base transceiver station (base transceiver station, BTS) in a global system for mobile communications (global system for mobile communications, GSM) or code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay node, an access point, a vehicle-mounted device, a wearable device, a network device in a future 5G network, a network device in a future evolved PLMN network, or the like. This is not limited in embodiments of this application.

In this application, the technical solutions in this application are described only by using FIG. 1 as an example. It may be understood that the first terminal device 110 and the second terminal device 120 may also be jointly connected to one network device, so that the first terminal device and the second terminal device can obtain corresponding resource configurations by using the network device. A connection manner in the communication system shown in FIG. 1 in this application constitutes no limitation on the protection scope of this application.

It should be understood that the technical solutions in this application are described only by using an example in FIG. 1 in which the communication system includes the first terminal device 110, the first network device 130, the second terminal device 120, and the second network device 140. The communication system may include only the first terminal device 110 and the second terminal device 120, or include more terminal devices and network devices. A quantity of communication devices in embodiments of this application should not be construed as a limitation on the application scope of this application.

The communication system shown in FIG. 1 includes two types of interfaces: a Uu interface and a PC5 interface. The Uu interface is an interface between a terminal device and a network device. For example, an interface between the first terminal device 110 and the first network device 130, and an interface between the second terminal device 120 and the second network device 140 are Uu interfaces. The PC5 interface is a direct connection interface between terminal devices. For example, a communication interface between the first terminal device 110 and the second terminal device 120 is a PC5 interface.

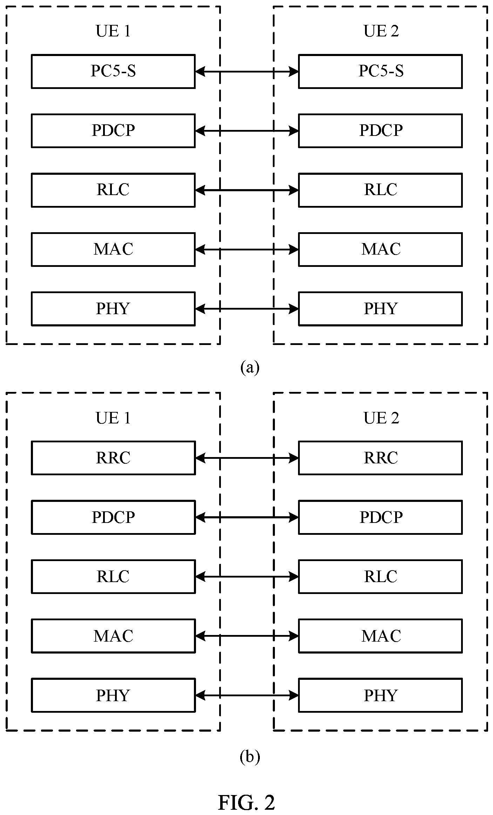

FIG. 2 shows control plane protocol stacks of a sidelink communication architecture based on an NR PC5 interface. The control plane protocol stack is mainly used to transmit PC5-signal (PC5-signal, PCS-S) protocol layer signaling and SL RRC signaling. Two terminal devices establish a unicast connection. A PC5-S layer of a terminal device (UE 1) that needs to initiate the connection sends direct communication request (direct communication request, DCR) information to request to establish the unicast connection, and notifies a peer side terminal device (UE 2) of some basic user information, and the like. A control plane protocol stack used to transmit the PCS-S signaling is shown in (a) in FIG. 2, and includes a PHY layer, a MAC layer, a radio link control (radio link control, RLC) layer, a PDCP layer, and a PC5-S layer, where the PHY layer is located at an L1 layer, the MAC layer, the RLC layer, and the PDCP layer are located at an L2 layer, and the PC5-S layer is located at an L3 layer.

Specifically, establishing a unicast connection between terminal devices includes the following steps.
Step 1: A first terminal device (the UE 1) sends DCR information to a second terminal device (the UE 2), where the DCR information carries an application layer identifier of the UE 1, an application layer identifier of the UE 2, a V2X service type of an L2 link that needs to be established, security information for establishing the link, and the like.
Step 2: The UE 2 sends direct security mode command (direct security mode command) feedback to the UE 1.
Step 3: The UE 1 sends direct security mode complete information (direct security mode complete) to the UE 2 to notify the UE 2 that a secure link is completed.
Step 4: The UE 2 sends direct communication accept (direct communication accept, DCA) information to the UE 1, where the DCA information includes the application layer identifier of the UE 2, quality of service (quality of service, QoS) information, an IP address configuration, and the like.

After the unicast connection is established, the UE 1 sends some RRC configuration signaling to the peer side UE 2 to establish an RRC connection. A control plane protocol stack used to transmit the SL RRC signaling is shown in (b) in FIG. 2, and includes a PHY layer, a MAC layer, an RLC layer, a PDCP layer, and a radio resource control (radio resource control, RRC) layer, where the PHY layer is located at an L1 layer, the MAC layer, the RLC layer, and the PDCP layer are located at an L2 layer, and the RRC layer is located at an L3 layer.

Specifically, a V2X application layer of UE 1 sends, to an access layer, a PC5 link identifier allocated to a unicast connection and related information, which include L2 identifiers (including L2 identifiers of the UE 1 and UE 2) and corresponding QoS parameters, to assist the access layer in maintaining the PC5 link identifier and the PC5 unicast connection related information.

However, because the DCR information or the DCA information is sent via an omnidirectional beam in step 1, this manner of establishing a sidelink greatly limits a distance between two terminal devices. In addition, with application of an electromagnetic wave with a higher frequency in a communication system, an application scope of a manner of establishing a sidelink between terminal devices is further reduced.

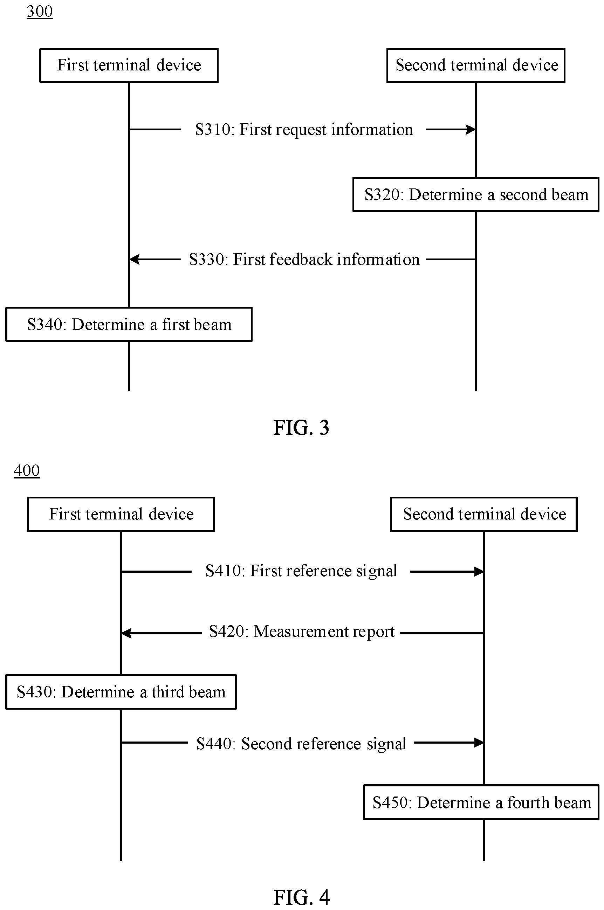

FIG. 3 is a schematic flowchart of a sidelink management method 300 according to an embodiment of this application.

S310: A first terminal device repeatedly sends first request information to a second terminal device via a plurality of first to-be-selected beams, where the first request information is used to trigger a connection to the second terminal device.

Correspondingly, the second terminal device receives the first request information from the first terminal device via a plurality of second to-be-selected beams, where the first request information is used by the first terminal device to trigger the connection to the second terminal device.

In S310, the first to-be-selected beam may be a channel state information reference signal (channel state information reference signal, CSI-RS) beam, a synchronization signal and physical broadcast channel block (synchronization signal and physical broadcast channel, SSB) beam, or the like. Different from time division multiplexing and frequency division multiplexing, a beam is formed based on spatial division multiplexing. The beam is formed by focusing energy of a signal in a direction. The beam enables a communication system to further add space resources based on time domain resources and frequency domain resources, so as to support more users, and further enables, by focusing a signal in one direction, a signal transmission distance to be longer. When communication is performed between devices, sending or receiving may be performed via a respective beam. For a beam, a transmit beam and a receive beam are not distinguished. When the beam is for transmitting, the beam may be referred to as a transmit beam; or when the beam is for receiving, the beam may be referred to as a receive beam.

The first to-be-selected beam is a beam formed by the first terminal device through beamforming, and a width of the first to-be-selected beam may be a first width. The second to-be-selected beam is a beam formed by the second terminal device through beamforming, for example, a width of the second to-be-selected beam may be a second width. The first width and the second width may be the same, or may be different.

The first request information is used by the first terminal device to request to establish the sidelink connection to the second terminal device. The first request information includes DCR information. The DCR information carries identifier information of the first terminal device and identifier information of the second terminal device. The identifier information may be an application layer identifier. The DCR information may further carry a V2X service type that needs to be established, security information for establishing a link, and the like. Therefore, the second terminal device can determine, based on the identifier of the second terminal device carried in the DCR information, that a target terminal device with which the first terminal device establishes the sidelink is the second terminal device, and perform another subsequent operation.

The first terminal device may be a sending terminal device between the first terminal device and the second terminal device. For example, the first terminal device may send the first request information to the second terminal device based on existence of data or signaling that needs to be transmitted to the second terminal device, to trigger establishment of the connection to the second terminal device.

In this embodiment of this application, repetition represents that the first request information including the same DCR information is sent via different first to-be-selected beams, that is, the first request information is sent on different space resources. For each first to-be-selected beam, the first request information may be sent periodically or aperiodically.

In this embodiment of this application, that a first terminal device repeatedly sends first request information to a second terminal device via a plurality of first to-be-selected beams includes one of the following operations:

The first terminal device repeatedly sends the first request information to the second terminal device via the plurality of first to-be-selected beams by using a hybrid automatic repeat request (hybrid automatic repeat request, HARQ).

The first terminal device repeatedly sends the first request information to the second terminal device via the plurality of first to-be-selected beams by using a packet data convergence protocol (packet data convergence protocol, PDCP).

The first terminal device repeatedly sends the first request information to the second terminal device via the plurality of first to-be-selected beams by using a PC5-S layer.

In some embodiments, the first terminal device may send, in a HARQ manner, the first request information via the plurality of first to-be-selected beams in different directions, where the first request information includes the same DCR information. The first request information may be sent for a plurality of times in the HARQ retransmission manner, and the first to-be-selected beam in a different direction is used each time, to implement beam sweeping.

In some other embodiments, the first terminal device may repeatedly transmit the DCR information at a PDCP layer. To be specific, the DCR information is replicated at the PDCP layer, and then the replicated DCR information is separately delivered to different RLC entities for transmission and is transmitted to a MAC layer through different logical channels. When transmitting the logical channels carrying the same DCR information, the MAC layer maps the logical channels to resources of the different first to-be-selected beams for sending, so as to implement beam sweeping processes of the DCR information in different directions, and send, via the first to-be-selected beams in the different directions, the first request information including the same DCR information.

In some other embodiments, the first terminal device may send, in a PC5-S repetition manner via the first candidate beams in different directions, the first request information including the same DCR information. The PC5-S layer is generally used to provide a sidelink connection management function, for example, sidelink establishment and release, security parameter control, and IP address allocation. The DCR information is sent by the PC5-S layer, and includes basic information of the first terminal device. The connection to the second terminal device is established by using an access layer. The PC5-S layer needs an additional indication to enable a physical layer to know that a plurality of new packets from the PC5-S layer have same content, so that the physical layer can send retransmission information to the second terminal device via the different first to-be-selected beams.

Beam sweeping can be implemented in all the three repeated sending manners. In the HARQ retransmission manner, because the same DCR information does not need to be replicated, only the DCR information needs to be repeatedly sent, overheads are low, and implementation is easier.

S320: The second terminal device determines a second beam based on the first request information, where the second beam is one of the plurality of second to-be-selected beams.

In S310, when receiving the first request information via the plurality of second to-be-selected beams in a beam sweeping manner, the second terminal device measures a signal that is in the first request information and that is used for measurement, to perform a process of determining the second beam in S320. For example, the first terminal device has two beams whose beam identifiers are respectively a beam 1 and a beam 2. The second terminal device has two beams whose beam identifiers are respectively a beam 3 and a beam 4. When receiving the first request information, the second terminal device may receive the first request information carried on transmit beams-receive beams: beam 1-beam 3, beam 1-beam 4, beam 2-beam 3, and beam 2-beam 4. After measuring received quality, for example, the second terminal device determines that a beam whose beam identifier is beam 4 is the second beam.

In some embodiments, received quality of the first request information corresponding to the second beam is greater than a first threshold.

For example, when performing beam sweeping to receive the first request information, the second terminal device may use a current beam as the second beam when the received quality of the currently used second to-be-selected beam is greater than the first threshold. When the received quality of the current beam does not meet a preset condition, receiving of the first request information carried on a next second to-be-selected beam continues until the second to-be-selected beam whose received quality is greater than the first threshold is obtained. The beam is determined as the second beam. A parameter representing the received quality may be a parameter like L1 or L3 reference signal received power (reference signal received power, RSRP) or reference signal received quality (reference signal received quality, RSRQ), or signal to interference plus noise ratio (signal to interference plus noise ratio, SINR) of the current beam. For example, if an identifier of the second to-be-selected beam currently used by the second terminal device to receive the first request information is a beam 4, and received quality is greater than the first threshold, the beam 4 may be used as the second beam.

For another example, when performing beam sweeping to receive the first request information, the second terminal device may receive the first request information based on different combinations of transmit and receive beams. When received quality of the first request information carried on a plurality of second to-be-selected beams meets the first threshold, the second terminal device may randomly select one of the plurality of to-be-selected beams as the second beam.

In some other embodiments, the received quality of the first request information corresponding to the second beam is highest in received quality of the first request information corresponding to the plurality of second to-be-selected beams.

Specifically, the first terminal device may send a quantity of the plurality of first to-be-selected beams to the second terminal device. Correspondingly, the second terminal device receives the quantity of first to-be-selected beams from the first terminal device. That the second terminal device receives the first request information from the first terminal device via a plurality of second to-be-selected beams includes: The second terminal device receives the first request information based on the plurality of first to-be-selected beams from the first terminal device via the plurality of second to-be-selected beams based on the quantity of the plurality of first to-be-selected beams. The first request information may include sidelink control information (sidelink control information, SCI) information, and the SCI information may indicate the quantity of transmit beams. Therefore, the second terminal device may traverse all the combinations of transmit and receive beams based on the quantity of transmit beams in less time, and select, from all the beams, the second to-be-selected beam whose received quality is the best or whose received quality meets the threshold as the second beam.

The second beam may be a beam with highest L1 or L3 RSRP or RSRQ, or SINR. For example, if the second terminal device learns of that the first terminal device uses two first to-be-selected beams, the second terminal device may sequentially receive, via all second to-be-selected beams of the second terminal device, the first request information carried on the two first to-be-selected beams, and after traversing all combinations of transmit and receive beams, select the second to-be-selected beam with best received quality as the second beam.

When the first terminal device repeatedly sends the first request information to the second terminal device via the plurality of first to-be-selected beams by using the HARQ, the quantity of first to-be-selected beams may not need to be sent to the second terminal device by using additional information such as SCI signaling. The second terminal device may directly obtain the quantity of first to-be-selected beams based on a HARQ retransmission property, traverse all combinations of transmit and receive beams more quickly, select beams whose received quality meets the threshold or perform comparison on received quality, and select a beam with best received quality from the second to-be-selected beams that meet the threshold as the second beam.

In this embodiment of this application, the second terminal device needs to successfully receive the first request information for the second terminal device to measure the received quality of the first request information. There are the following three criteria for determining, by the second terminal device, that the first request information is successfully received.

For example, the received quality of the first request information received by the second terminal device exceeds a preset threshold.

For another example, the first request information received by the second terminal device is successfully decoded.

For still another example, the received quality of the second request information received by the second terminal device does not exceed a preset threshold, and single decoding fails, but the second terminal device successfully decodes the first request information next time. In this case, it can also be determined, through HARQ soft combination, that the first request information is successfully received, and a next operation is performed.

S330: The second terminal device sends first feedback information to the first terminal device via the second beam, where the first feedback information is used to provide feedback on the first request information.

Correspondingly, the first terminal device receives the first feedback information from the second terminal device via the plurality of first to-be-selected beams.

In S330, the first feedback information may include DCA information, the DCA information includes the identifier information of the second terminal device, the identifier information may be application layer identifier information, and the DCA information may further include QoS information, an IP address configuration, and the like. The second terminal device reuses the second beam determined in S320 to send the first feedback information, where the DCA information in the first feedback information is feedback for the DCR information.

In this embodiment of this application, after receiving the first request information that is sent by the first terminal device via all the first to-be-selected beams, the second terminal device determines the second beam, and then sends the first feedback information to the first terminal device via the second beam.

S340: The first terminal device determines a first beam based on the first feedback information, where the first beam is one of the plurality of first to-be-selected beams.

In some embodiments, the first terminal device receives the first feedback information in a beam sweeping manner via the plurality of first to-be-selected beams, measures information that is in the first feedback information and that is used for measurement, and determines the first beam based on received quality, where the first beam is one of the plurality of first to-be-selected beams. For example, the first terminal device receives, via a beam 1 and a beam 2, the first feedback information carried on a second beam beam 4 of the second terminal device, and determines the first beam based on the received quality.

A manner in which the first terminal device determines the first beam is similar to a manner in which the second terminal device determines the second beam in step S320. That is, in some embodiments, received quality of the first feedback information corresponding to the first beam is greater than a first threshold; or in some other embodiments, the received quality of the first feedback information corresponding to the first beam is highest in received quality of the first feedback information corresponding to the plurality of first to-be-selected beams. For specific details, refer to a process of determining the second beam. For brevity, details are not described herein again.

In some other embodiments, the first request information in S310 may include indication information of the first to-be-selected beam carrying the first request information, and the first feedback information includes indication information of the first beam. Therefore, the first terminal device directly determines the first beam based on the indication information, of the first beam, in the first feedback information.

Specifically, the SCI information in the first request information may indicate the first to-be-selected beam used by the first terminal device to send the first request information. In step S330, the second terminal device may include, in the first feedback information, the indication information of the first to-be-selected beam corresponding to the determined second beam, to send to the first terminal device. Therefore, after receiving the first feedback information in step S340, the first terminal device may stop beam sweeping and measurement, directly learn of an optimal transmit beam direction of the first terminal device based on the first feedback information, and determine the first to-be-selected beam as the first beam. This reduces an additional sweeping process and a process of measuring the L1 or L3 RSRP or RSRQ, or SINR during determining of the first beam, and reduces sweeping and measurement overheads of the first terminal device. For example, as described above, when receiving the first request information, the second terminal device may receive the first request information carried on the beam 1-beam 3, beam 1-beam 4, beam 2-beam 3, and beam 2-beam 4. When determining that a receive beam is the beam 4, the second terminal device may learn of, for example, based on the first to-be-selected beam indicated by the SCI information, that a transmit beam corresponding to the beam 4 is the beam 1, and may send, to the first terminal device when sending the first feedback information to the first terminal device, information indicating the beam beam 1. Therefore, when receiving the first feedback information through blind sweeping, the first terminal device does not need to perform measurement again, that is, may use the beam corresponding to the beam 1 as the first beam to perform a subsequent operation. This reduces measurement overheads of the first terminal device.

The indication information of the first to-be-selected beam may explicitly or implicitly indicate the first to-be-selected beam, that is, explicitly indicate the first to-be-selected beam by using a beam sequence number/number/index or the like, or implicitly indicate the first to-be-selected beam by using a resource of the first to-be-selected beam. Specifically, the indication information of the first to-be-selected beam may be at least one of the following: a beam number, a beam management resource number, a side signal resource number, an absolute index of a beam, a relative index of the beam, a logical index of the beam, an index of an antenna port corresponding to the beam, an index of an antenna port group corresponding to the beam, beam pair link (beam pair link, BPL) information, a transmit parameter (Tx parameter) corresponding to the beam, a receive parameter (Rx parameter) corresponding to the beam, a transmit weight corresponding to the beam, a weight matrix corresponding to the beam, a weight vector corresponding to the beam, a receive weight corresponding to the beam, an index of the transmit weight corresponding to the beam, an index of the weight matrix corresponding to the beam, an index of the weight vector corresponding to the beam, an index of the receive weight corresponding to the beam, a receive codebook corresponding to the beam, a transmit codebook corresponding to the beam, an index of the receive codebook corresponding to the beam, and an index of the transmit codebook corresponding to the beam.

In this embodiment of this application, the first to-be-selected beam and the second to-be-selected beam each may be a channel state information reference signal CSI-RS beam, an SSB beam, or another beam.

According to the technical solution in the method 300, the first terminal device and the second terminal device determine their respective first beam and second beam, and the first beam and the second beam may be wide beams. To further improve communication quality between the first terminal device and the second terminal device, a fine-granularity beam pairing process may be performed.

FIG. 4 is a schematic flowchart of a sidelink management method according to this embodiment of this application. In the method 400, based on the method 300, the first terminal device and the second terminal device further perform beamforming on the coarse-granularity first beam and the coarse-granularity second beam to form fine-granularity beams, and perform fine-granularity beam pairing.

S410: The first terminal device sends a first reference signal to the second terminal device based on the first beam via a plurality of third to-be-selected beams.

Correspondingly, the second terminal device receives, from the first terminal device via the second beam, the first reference signal sent based on the plurality of third to-be-selected beams.

In S410, the third to-be-selected beam may be a beam formed by further beamforming of the first beam. For example, a width of the third to-be-selected beam may be less than a width of the first beam. The first reference signal may be a CSI-RS signal or an SSB signal, and the third to-be-selected beam may be a CSI-RS beam or an SSB beam. The first terminal device sends the first reference signal to the second terminal device via the plurality of third to-be-selected beams. For example, in the method 300, the first beam is a beam 1, and the second beam is a beam 4. In S410, the first terminal device sends the first reference signal to the second terminal device via a beam 1.1 and a beam 1.2 that are obtained by continuing beamforming on the beam 1, and the second terminal device receives, via the previous beam 4, the first reference signal carried on the beam 1.1 and the beam 1.2. Step S410 is performed to obtain a fine-granularity beam of the first terminal device. Therefore, the second terminal device may receive the first reference signal via the previously determined second beam.

In this embodiment of this application, the first terminal device may send resource indication information to the second terminal device, where the resource indication information indicates a dedicated resource. Correspondingly, the second terminal device receives the resource indication information from the first terminal device.

The resource indication information may be sent to the second terminal device by using SCI information. The resource may be a time-frequency resource, a space resource, or the like. The first terminal device may send the resource indication information to the second terminal device by using SCI signaling, so that the second terminal device can receive the first reference signal based on the resource indication information.

In some embodiments, the dedicated resource may be a periodic resource or an aperiodic resource, and is a resource configured for sending the first reference signal.

Different from that in the conventional technology in which data and a reference signal are transmitted together, to send the first reference signal when no data needs to be sent, and complete beam pairing, in this embodiment of this application, the dedicated resource is designed for the first reference signal, that is, a resource, for the first reference signal, indicated by the resource indication information is the dedicated resource. That is, the reference signal is separately sent at an original sidelink resource location, that is, the reference signal is not sent together with data of a physical sidelink shared channel (physical sidelink share channel, PSSCH).

In this embodiment of this application, the first terminal device may further obtain the dedicated resource.

In some embodiments, resource allocation on a sidelink is a mode 1. When there is no configured resource, the first terminal device sends dedicated resource request information to a first network device. The first terminal device receives dedicated resource indication information from the first network device, where the dedicated resource indication information indicates the dedicated resource.

Correspondingly, the first network device receives the dedicated resource request information from the first terminal device, and the first network device sends the dedicated resource indication information to the first terminal device.

The first terminal device may send the dedicated resource request information to the first network device by using a scheduling request (scheduling request, SR), RRC, or sidelink user information (sidelink user information, SUI), to apply for the dedicated resource for the first reference signal. Therefore, after receiving the request information from the first terminal device, the first network device may indicate the dedicated resource for the first reference signal to the first terminal device by using downlink control information (downlink control information, DCI).

In some other embodiments, resource allocation on a sidelink is a mode 2, and a plurality of links including a sidelink between the first terminal device and the second terminal device contend for using a pre-configured resource set. The first terminal device obtains resource occupation information of another sidelink, and the first terminal device determines the dedicated resource based on the resource occupation information. Therefore, the first terminal device can demodulate broadcast SCI information of a sidelink on which another terminal device is located, to learn of an occupied resource, and select an unoccupied resource from the pre-configured resource set as the dedicated resource for the first reference signal.

For example, the first reference signal is a CSI-RS signal. FIG. 5 shows two dedicated CSI-RS resource configuration manners according to this embodiment of this application.

(a) in FIG. 5 is a diagram of a dedicated resource configuration according to this embodiment of this application. A shadow part is a dedicated resource configured for the sidelink. It can be seen that the CSI-RS signal is not sent together with data. This implements convenient beam pairing.

In some other embodiments, to implement independent sending of the CSI-RS signal, a dedicated CSI-RS sending mechanism may be designed. A plurality of sidelinks share a CSI-RS channel, and a sending terminal device on a sidelink notifies a peer side terminal device of a resource configuration for the CSI-RS signal by using a PC5-RRC signal, so that the terminal devices at both ends of the sidelink can perform CSI-RS sending and receiving on corresponding resources.

(b) in FIG. 5 is a diagram of another dedicated resource configuration according to this embodiment of this application. It can be seen that a dedicated CSI-RS channel is designed for transmission of the CSI-RS signal, and a sidelink 1, a sidelink 2, and a sidelink 3 share the CSI-RS channel through time division multiplexing. This improves resource utilization. In addition, the CSI-RS signal is not sent together with data, and convenient fine-granularity sidelink beam pairing is implemented.

In this embodiment of this application, the first terminal device may further send relative resource indication information to the second terminal device before sending the resource indication information. The relative resource indication information may include a sending time domain location and a feedback time domain location. The sending time domain location indicates a relative sending time domain of the first reference signal, and the feedback time domain location indicates a relative feedback time domain for feeding back the first reference signal.

The relative resource indication information may be sent by the first terminal device to the second terminal device by using PC5-RRC signaling or SCI signaling. After receiving the sending time domain location and the feedback time domain location, the second terminal device may determine the relative sending time domain of the first reference signal relative to the resource indication information and the relative feedback time domain for feeding back the first reference signal. For example, the relative sending time domain and the relative feedback time domain relative to the resource indication information are respectively three slots and five slots. After receiving the resource indication information, the second terminal device can learn of that the first reference signal is sent in three slots after the resource indication information, receive the first reference signal in corresponding slots, and feed back the received first reference signal in five slots after the resource indication information is sent. The relative resource indication information may also be sent to the second terminal device together with the resource indication information.

S420: The second terminal device measures the first reference signal, and sends a measurement report to the first terminal device.

Correspondingly, the first terminal device receives the measurement report from the second terminal device.

In S420, the measurement report indicates received quality of the first reference signal and a corresponding third to-be-selected beam. The received quality includes a parameter such as L1 or L3 RSRP or RSRQ, or SINR of the first reference signal. In the measurement report, a channel state information reference signal resource indicator (CSI-RS resource indicator, CRI) may be used to implicitly indicate the corresponding transmit beam. The CRI indicates resources indicated by the resource indication information, and is in a one-to-one correspondence with the plurality of third to-be-selected beams. The corresponding transmit beam may also be explicitly indicated in the measurement report by using a beam identifier. In this case, the resource indication information sent by the first terminal device to the second terminal device may further include the corresponding beam identifier that explicitly indicates the transmit beam. For example, the beam identifier may be a beam index.

After receiving the resource indication information, the second terminal device receives the first reference signal on the corresponding dedicated resource by using the previously determined second beam, and measures the received quality of the first reference signal. Because the first terminal device has indicated, in the resource indication information, the resource for sending the first reference signal, the second terminal device can map a measurement result to the corresponding transmit beam. The measurement result includes the parameter such as the L1 or L3 RSRP or RSRQ, or SINR that reflects the received quality.

When the second terminal device sends the measurement report to the first terminal device, if there is no available resource, the second terminal device may request a sending resource for the measurement report from a second network device or demodulate SCI information of another sidelink to obtain a sending resource. For related details, refer to the foregoing manners of obtaining the dedicated resource for the first reference signal in the mode 1 and the mode 2. Details are not described herein again.

S430: The first terminal device determines a third beam based on the measurement report.

The third beam is one of the plurality of third to-be-selected beams. The first terminal device may use, as the third beam based on the measurement report, the third to-be-selected beam corresponding to the first reference signal whose received quality meets a preset condition. For example, the first terminal device may use a beam whose received quality meets a threshold as the third beam, or may use a transmit beam with best received quality as the third beam. For specific details, refer to a manner of determining the first beam or the second beam.

S440: The first terminal device sends a second reference signal to the second terminal device via the third beam.

Correspondingly, the second terminal device receives the second reference signal via a plurality of fourth to-be-selected beams.

In S440, the first terminal device sends the second reference signal via the third beam, where the third beam is a preferable fine-granularity transmit beam determined by the first terminal device. After determining the preferable fine-granularity transmit beam of the first terminal device, the first terminal device may send the second reference signal to the second terminal device via the third beam, so that the second terminal device receives the second reference signal from the first terminal device via the plurality of fourth to-be-selected beams.

The fourth to-be-selected beam is a fine-granularity beam formed by further beamforming of the second beam, and a width of the fourth to-be-selected beam may be less than a width of the second beam.

Similarly, the first terminal device may further send resource indication information to the second terminal device, to indicate a resource for sending the second reference signal. The first terminal device may further send, before sending the resource indication information, relative resource indication information to the second terminal device, to indicate a sending time domain location of the second reference signal relative to the resource indication information and a feedback time domain location for feedback. For related details of the resource for the second reference signal, refer to related details of the resource for the first reference signal. For brevity, details are not described herein again.

S450: The second terminal device measures the second reference signal, and determines a fourth beam.

In S450, the fourth beam is one of the fourth to-be-selected beams. A process in which the second terminal device determines the fourth beam may be selecting, as the fourth beam, the current fourth to-be-selected beam whose received quality is greater than a preset threshold or a beam with highest received quality by traversing all combinations of the third beam-fourth to-be-selected beams, and determining the fourth beam based on a parameter such as L1 or L3 RSRP or RSRQ, or SINR.

In the method 400, this application describes a process in which the first terminal device first determines the third beam, and then the second terminal device determines the fourth beam. In a specific case, alternatively, the second terminal device may first determine the fourth beam, and then the first terminal device determines the third beam. Specific steps are as follows.

Step 1: The first terminal device sends a first reference signal to the second terminal device via a first beam.

Correspondingly, the second terminal device receives the first reference signal from the first terminal device via a plurality of fourth to-be-selected beams.

The fourth to-be-selected beam is a beam obtained by further beamforming of a second beam, and a width of the fourth to-be-selected beam may be less than a width of the second beam.

Step 2: The second terminal device measures the first reference signal, and determines the fourth beam.

The fourth beam is one of the fourth to-be-selected beams.

Step 3: The first terminal device sends a second reference signal to the second terminal device via a plurality of third to-be-selected beams.

Correspondingly, the second terminal device receives the second reference signal via the fourth beam.

The third to-be-selected beam is a beam obtained by further beamforming a first beam, and a width of the third to-be-selected beam may be less than a width of the first beam.

Step 4: The second terminal device measures the second reference signal, and sends a measurement report to the first terminal device, where the measurement report indicates the third to-be-selected beam and received quality of the corresponding second reference signal.

Correspondingly, the first terminal device receives the measurement report from the second terminal device.

Step 5: The first terminal device determines the third beam based on the measurement report.

The third beam is one of the third to-be-selected beams.

For specific details, refer to the description in the foregoing method 400. For brevity, details are not described herein again.

After the steps of the technical solutions in FIG. 3 and FIG. 4, the first terminal device and the second terminal device establish a unicast connection. In some embodiments, communication quality of the third beam and the fourth beam for communication between the first terminal device and the second terminal device is lower than a preset threshold, that is, a beam failure occurs.

For example, the first terminal device determines, based on feedback information from the second terminal device, that the beam failure occurs. The feedback information may include at least one of negative acknowledgment (non-acknowledgement, NACK) feedback for communication between the third beam and the fourth beam, feedback for a quantity of discontinuous transmission times for communication between the third beam and the fourth beam, and feedback for measurement information for communication between the third beam and the fourth beam. The measurement information may be a parameter such as L1 or L3 RSRP or RSRQ, or SINR that reflects the communication quality.

In this case, the first terminal device may activate a resource for a candidate beam for beam recovery, to perform a beam recovery process. In some embodiments, the first terminal device may activate, by sending, to the second terminal device, configuration information indicating the resource for the candidate beam, the resource for the candidate beam for beam recovery, and the resource for the candidate beam is activated, so that the first terminal device and the second terminal device can perform beam recovery on the resource. In some other embodiments, before determining the beam failure, the first terminal device sends, to the second terminal device, configuration information indicating the resource for the candidate beam, to activate the resource for the candidate beam for beam recovery, and the resource for the candidate beam is deactivated. After determining that the beam failure, the first terminal device activates the resource for the candidate beam, and sends candidate beam activation indication information to the second terminal device to indicate that the resource for the candidate beam has been activated, so that the second terminal device can receive reference information sent when the first terminal device activates the resource for the candidate beam, and determines, based on a measurement result of received quality, the beam for recovery.

For another example, the second terminal device determines the beam failure, and the second terminal device may directly determine, based on a status of receiving a reference signal or data, that the beam failure occurs. For a specific indicator, refer to a scenario in which the first terminal device determines the beam failure.

After determining the beam failure, the second terminal device may send beam recovery request information to the first terminal device. Before determining the beam failure, the second terminal device may have received the configuration information that is sent by the first terminal device and that indicates the resource for the candidate beam and that is used to activate the resource for the candidate beam for beam recovery, and the resource for the candidate beam is deactivated. Therefore, after determining that the beam failure occurs, the second terminal device may notify, by using the beam recovery request information, the first terminal device that the beam failure occurs, and the first terminal device may activate the pre-configured resource for the candidate beam, and notify, by using the candidate beam activation indication information, the second terminal device that the resource for the candidate beam has been activated. Then, the second terminal device may receive the reference information sent when the first terminal device activates the resource for the candidate beam, and determine, based on the measurement result of the received quality, the beam for recovery.

FIG. 6 is a schematic flowchart of another beam management method according to an embodiment of this application. As shown in FIG. 6, the method includes the following steps.

S510: A first terminal device sends a third reference signal via a plurality of beams.

Correspondingly, a plurality of terminal devices receive the third reference signal via a plurality of beams.

Before S510, a first network device sends resource configuration information to the first terminal device. The resource configuration information includes a first resource configuration parameter. The first resource configuration parameter may include a first quantity threshold, and may further include a first periodicity, a first resource, or a first interval. The first periodicity indicates a sending periodicity of the third reference signal, and the first interval indicates a sending interval of the third reference signal in a same sending periodicity. The first resource indicates a sending resource of the third reference signal, and the first quantity threshold Hi indicates a threshold of a quantity of available beams. A third reference signal sending periodicity is a sending periodicity of the third reference signal, the sending interval of the third reference signal is a sending interval between third reference signals in one sending periodicity, and each third reference signal in one sending periodicity is carried via one transmit beam of the first terminal device. The resource configuration information may further include an identifier of the first terminal device. The resource configuration parameter may be an RRC configuration, a system information (system information block, SIB) configuration, or pre-configured information.

The plurality of beams in S510 may be all beams of the first terminal device, or may be some of all the beams. For example, the some beams may be beams within a specific angle range in all beams obtained through beamforming. For another example, the some beams may be beams with good received quality in all beams formed through beamforming determined through measurement. For example, a quantity of the plurality of beams may be B₁, and B₁ may be determined based on a factor like a first resource configured by a network device. For example, when there are a large quantity of first resources, the first terminal device may form more beams through beamforming; or when there are a small quantity of first resources, the first terminal device forms a small quantity of beams through beamforming. The third reference signal may be an SSB signal. The first terminal device may periodically send the third reference signal, and may send the third reference signal based on the first periodicity in the first resource configuration parameter, and send the third reference signal on the first resource. In other words, the third reference signal may be periodically sent.

The plurality of terminal devices may include a second terminal device, or may not include the second terminal device. Another terminal device around the first terminal device may perform periodic sweeping, to receive the third reference signal.

S520: The plurality of terminal devices send second feedback information to the first terminal device.

Any one of the plurality of terminal devices may receive the third reference signal in a beam sweeping manner via a plurality of beams obtained through beamforming. When sending the third reference signal via the plurality of beams, the first terminal device may further send beam indication information of the beams carrying the third reference signal. Any one of the plurality of terminal devices may obtain, according to a specific mapping rule, a feedback location corresponding to the third reference signal. The mapping rule may be pre-agreed on or pre-configured with the network device. The plurality of terminal devices may measure the third reference signal, and determine received quality of the third reference signal carried on different beams of the first terminal device. The received quality may include L1 or L3 RSRP or RSRQ, SINR, or the like. In some embodiments, each of the plurality of terminal devices may feed back, to the first terminal device, a beam whose received quality is higher than a preset threshold (a received quality threshold). In some other embodiments, each of the plurality of terminal devices may feed back a beam with highest received quality to the first terminal device. For example, the first terminal device obtains a beam 1 (beam 1), a beam 2 (beam 2), and a beam 3 (beam 3) through beamforming, and one of the plurality of terminal devices obtains a beam 4 (beam 4) and a beam 5 (beam 5) through beamforming. When receiving the third reference signal, the terminal device may separately measure received quality of the third reference signals based on the beam 1-beam 4, beam 1-beam 5, beam 2-beam 4, beam 2-beam 5, beam 3-beam 4, and the beam 3-beam 5. It is assumed that received quality of the third reference signals carried on the beam 1-beam 4, beam 1-beam 5, and beam 3-beam 4 is greater than the preset threshold, and received quality of the third reference signal carried on the beam 1-beam 5 is highest, the terminal device may feed back the beam 1 and the beam 3 to the first terminal device, or the terminal device may feed back only the beam 1 to the first terminal device.

When performing feedback to the first terminal device, the terminal device may feed back a corresponding beam to the first terminal device in an explicit manner, or feed back the corresponding beam to the first terminal device in an implicit manner. The feedback in the explicit manner is to directly feed back a beam ID, a beam index, a beam receiving resource, and the like in the feedback information. The feedback of the corresponding beam in the implicit manner is to implicitly indicate the corresponding transmit beam by using a fed-back resource location. For example, sending slots of the third reference signals carried on the beam 1, the beam 2, and the beam 3 are respectively a slot 1, a slot 2, and a slot 3, and corresponding default feedback slots are a slot 4, a slot 5, and a slot 6; and if the terminal device needs to feed back the beam 1 and the beam 2, the feedback information may be separately sent in the slot 4 and the slot 5. In this way, any one of the plurality of terminal devices feeds back at least one beam to the first terminal device, where these pieces of feedback indicate A₁ beams of the first terminal device. This means that each of the A₁ beams determined by the first terminal device based on the feedback information corresponds to at least one terminal device (one of the plurality of terminal devices).

In this embodiment of this application, the second feedback information may be understood as a feedback information set sent by the plurality of terminal devices, that is, each of the plurality of terminal devices sends the feedback information to the first terminal device, so that the first terminal device performs a subsequent operation based on the second feedback information including the feedback information set to determine a plurality of first to-be-selected beams.

S530: The first terminal device determines a first to-be-selected beam based on a quantity relationship between A₁ and H₁.

In S530, the first terminal device may determine A₁ available beams based on the feedback information sent by the plurality of terminal devices. There may be a case in which two or more terminal devices feed back a same beam.

The first terminal device may compare A₁ with the first quantity threshold Hi, and determine, based on a comparison result, a beam for subsequently sending DCR information. Specifically, a physical layer or a MAC layer of the first terminal device performs a corresponding operation based on the quantity relationship between A₁ and Hi. Hi may be a value that is less than B₁ and that is determined by the first network device based on at least one of factors such as the first resource (a quantity B₁ of beams that affect the first terminal device) and the first periodicity.

When A₁≥H₁, the first terminal device may use the A₁ available beams as the plurality of first to-be-selected beams mentioned above. A determining process may be implemented by the physical layer or the MAC layer of the first terminal device. If the determining process is implemented by the physical layer, after determining that A₁≥H₁, the physical layer reports the quantity A₁ or indication information of the A₁ beams to the MAC layer, so that the MAC layer determines a quantity of retransmission (HARQ retransmission) times of first request information, or the MAC layer indicates a quantity of the first to-be-selected beams to a higher layer. When a unicast connection is subsequently performed, the higher layer may repeat or retransmit the first request information (the DCR information) for a corresponding quantity of retransmission times (PDCP repetition or PC5-S retransmission). The following operations are performed to complete the unicast connection between the first terminal device and the second terminal device, and further implement fine-granularity beam pairing.

S1: The first terminal device repeatedly sends the first request information to the second terminal device via the first to-be-selected beam.

Correspondingly, the second terminal device receives the first request information from the first terminal device via a plurality of second to-be-selected beams.

In S1, the first request information includes the DCR information, and the first terminal device triggers the connection to the second terminal device by using the DCR information. The first request information is sent by the first terminal device by using HARQ retransmission, PDCP repetition, or PC5-S retransmission based on the first to-be-selected beams in different directions, to form beam sweeping.

S2: The second terminal device measures the first request information, and determines a second beam.

The second beam may be a beam with highest received quality in the second to-be-selected beams or a beam whose received quality meets a first threshold.

S3: The second terminal device sends first feedback information to the first terminal device via the second beam.

Correspondingly, the first terminal device receives the first feedback information from the first terminal device via the first to-be-selected beam.

In S3, the first feedback information includes DCA information, and is feedback for the DCR information.

S4: The first terminal device measures the first feedback information, and determines a first beam.

Optionally, the first request information in S1 includes beam indication information of the first to-be-selected beam, and the first feedback information in S4 includes indication information of the first to-be-selected beam that carries the first request information and that corresponds to the second beam. The first terminal device may directly determine the first beam based on the indication information of the first to-be-selected beam, provided that the first terminal device successfully receives the first feedback information through blind sweeping.

The first terminal device and the second terminal device may complete the unicast connection in S1 to S4, and the first terminal device may further perform fine-granularity beam pairing in the following steps S4 to S9.

S5: The first terminal device sends a first reference signal to the second terminal device based on the first beam via a plurality of third to-be-selected beams.

Correspondingly, the second terminal device receives, from the first terminal device via the second beam, the first reference signal sent based on the plurality of third to-be-selected beams.

Before S5, the first terminal device may send PC5-RRC information to the second terminal device. Correspondingly, the second terminal device receives the PC5-RRC information.

The PC5-RRC information includes a sending resource, a sending periodicity, a sending interval, a feedback threshold, a feedback resource, and the like of the first reference signal, and may further include an ID of the second terminal device. Configuration information included in the PC5-RRC information may be RRC information or SIB information sent by the first network device, or may be pre-configured information.

The first reference signal may be separately sent, that is, is not sent with a PSSCH. For example, the first reference signal is a CSI-RS, and the PC5-RRC information may include a resource location, a sending periodicity, and the like of the first reference signal.

Alternatively, the first reference signal may be sent along with a periodic PSSCH, for example, sent along with a periodic padding packet. The first terminal device may indicate a sending resource location and a feedback resource location of the first reference signal by using SCI information.

The resource for the first reference signal may be a specially configured resource, or may be a resource selected by the first terminal device from a pre-configured resource set.

After receiving the PC5-RRC information, the second terminal device may send PC5-RRC complete information to the first terminal device, to indicate that the second terminal device successfully receives the PC5-RRC information.

S6: The second terminal device measures the first reference signal, and sends a measurement report to the first terminal device.

Correspondingly, the first terminal device receives the measurement report from the second terminal device.

S7: The first terminal device determines a third beam based on the measurement report.

The third beam is one of the plurality of third to-be-selected beams. The first terminal device may use, as the third beam based on the measurement report, the third to-be-selected beam corresponding to the first reference signal whose received quality meets a preset condition. For example, the first terminal device may use a beam whose received quality meets a threshold as the third beam, or may use a transmit beam with best received quality as the third beam.

S8: The first terminal device sends a second reference signal to the second terminal device via the third beam.

Correspondingly, the second terminal device receives the second reference signal via a plurality of fourth to-be-selected beams.

S9: The second terminal device measures the second reference signal, and determines a fourth beam.

Alternatively, in S5, the second terminal device may receive the first reference signal via the plurality of fourth to-be-selected beams, and directly determine the fourth beam as an optimal beam based on the received quality. The second terminal device may send the measurement report to the first terminal device, and feed back, when receiving the first reference signal, a transmit beam ID or a transmit resource of the first terminal device and the corresponding received quality. The first terminal device may determine the optimal beam based on the measurement report. The first terminal device and the second terminal device may establish a beam pairing relationship based on optimal beams of the two parties.

For details of the steps S1 to S9, refer to descriptions of related embodiments in FIG. 3 and FIG. 4. Details are not described herein again.

When A₁<H₁, the first terminal device and the second terminal device may perform any one of the following operations.

### Operation 1:

A second resource configuration parameter is obtained, where the second resource configuration parameter may include a second quantity threshold Hz, and may further include a second periodicity, a second interval, and a second resource. The second periodicity is shorter than the first periodicity, the second interval is shorter than the first interval, and/or the second resource is less than the first resource. When the second periodicity is shorter than the first periodicity or the second interval is shorter than the first interval, when obtaining the available beams in steps S510 to S530, the first terminal device may obtain a larger quantity A₂ of available beams, so that A₂≥H₂. The first resource may have a same size as the second resource, and the first quantity threshold and the second quantity threshold may also be the same. Optionally, the first resource and the second resource may be different, and/or the first quantity threshold and the second quantity threshold may be different.

When the second resource is less than the first resource, when the first terminal device performs beamforming based on the second resource configuration parameter, a smaller quantity of beams is obtained, so that a width of a single beam is wider and a coverage area is larger. In this case, the second quantity threshold may be less than the first quantity threshold, so that A₂≥H₂ can be implemented.

After an operation is performed according to steps similar to S510 to S530, after the A₂ available beams are determined, values of A₂ and H₂ may be compared, and whether a third resource configuration parameter needs to be obtained is determined based on the values of A₂ and H₂. If A₂<H₂, the first terminal device continues to obtain a next resource configuration parameter until that Aₙ≥Hₙ is determined after an n^{th} resource configuration parameter is obtained. In other words, after the first terminal device determines, after obtaining the first resource configuration parameter, the second resource configuration parameter, ..., and an (n-1)^{th} resource configuration parameter, that A₁<H₁, A₂<H₂, ..., and Aₙ₋₁<Hₙ₋₁, the first terminal device continues to obtain the n^{th} resource configuration parameter. After obtaining the n^{th} resource configuration parameter and performing operations similar to steps S510 to S530, the first terminal device may determine the Aₙ available beams, and compare the values of Aₙ and Hₙ. If Aₙ≥Hₙ, the first terminal device may use, according to the steps S1 to S4, the Aₙ available beams as the first to-be-selected beams to perform the unicast connection to the second terminal device, and optionally, perform fine-granularity pairing according to steps S5 to S9.

Aₙ≥Hₙ can be finally implemented in the foregoing manner. This can remove, based on feedback information of a terminal device around the first terminal device, a beam at a location in which there is no another terminal device, prevent prolonging a unicast connection process because the first terminal device directly sends the DCR information via all the beams obtained through beamforming, and reserve a specific quantity of beams, so that an appropriate beam is obtained during the unicast connection.

The first terminal device may obtain the next resource configuration parameter in two manners. In some embodiments, the first terminal device may send request information to the first network device each time the first terminal device obtains a resource configuration parameter, so that the first network device can send the resource configuration parameter to the first terminal device when receiving the request information, where the resource configuration parameter sent by the network device this time needs to meet a specific condition. That is, when an m^{th} resource configuration parameter is obtained, an m^{th} periodicity is shorter than an (m-1)^{th} periodicity, an m^{th} interval is shorter than an (m-1)^{th} interval, and/or an m^{th} resource is less than an (m-1)^{th} resource (the (m-1)^{th} periodicity, the (m-1)^{th} interval, and the (m-1)^{th} interval are respectively a sending periodicity of the third reference signal indicated in an (m-1)^{th} resource configuration parameter, an interval of the third reference signal in one same sending periodicity, and a sending resource of the third reference signal, and the m^{th} periodicity, the m^{th} interval, and the m^{th} interval are respectively a sending periodicity of the third reference signal indicated in the m^{th} resource configuration parameter, a sending interval of the third reference signal in one same sending periodicity, and a sending resource of the third reference signal). In this way, the resource is configured and used at any time, and a waste caused by pre-configuring the resource is reduced. The first terminal device needs to be in an RRC connected state when sending a request to the first network device, and the first terminal device may request, by reporting the quantity of available beams, the first network device to deliver the next resource configuration parameter.

In some other embodiments, when the first network device sends the resource configuration information to the first terminal device, the first resource configuration parameter, the second resource configuration parameter, ..., and the n^{th} resource configuration parameter are all sent via a resource configuration list, and the resource configuration list is sent to the first terminal device before the first terminal device sends the third reference signal for the first time. The first resource configuration parameter, the second resource configuration parameter, ..., and the n^{th} resource configuration parameter are arranged in the resource configuration list according to a specific rule, for example, arranged in ascending or descending order. Therefore, when an available beam quantity Aₘ₋₁ obtained based on the (m-1)^{th} resource configuration parameter is less than the (m-1)^{th} quantity threshold Hₘ₋₁, the first terminal device directly obtains the m^{th} resource configuration parameter from the resource configuration list. This reduces signaling interaction between the first terminal device and the first network device. In addition, because the first network device sends, by using resource configuration information, all pre-configured resource configuration parameters to the first terminal device at one time in a form of the resource configuration list, the first terminal device does not need to be in the RRC connected state, or may be in an RRC non-connected state or located in an area not covered by a radio access network. If the first terminal device is in the RRC non-connected state, the resource configuration information may be configured by using system information (system information block, SIB). If the first terminal device is in an area without a wireless network connection, the resource configuration list may be pre-configured.

Operation 2: The first terminal device uses an omnidirectional beam as the first to-be-selected beam, where the omnidirectional beam is not a beam obtained through beamforming, but a beam that has no direction or points to all directions in space. The first terminal device may perform the unicast connection to the second terminal device according to the following steps S11 and S12, and optionally, continue to perform fine-granularity beam pairing according to S13 to S16.

S11: The first terminal device sends first request information to the second terminal device via the omnidirectional beam.

Correspondingly, the second terminal device receives the first request information from the first terminal device via an omnidirectional beam.

In S11, the first request information includes DCR information, and the first terminal device triggers a connection to the second terminal device by using the DCR information.

S12: The second terminal device sends first feedback information to the first terminal device via the omnidirectional beam.

Correspondingly, the first terminal device receives the first feedback information from the first terminal device via the omnidirectional beam.

In S12, the first feedback information includes DCA information, and is feedback for the DCR information.

In S11 and S12, the first terminal device may omnidirectionally send the DCR information and receive the DCA information on an FR (frequency rang) 1 or FR2; and the second terminal device may omnidirectionally receive the DCR information and send the DCA information on the FR 1 or FR2, to establish the unicast connection. A frequency range corresponding to the FR 1 is 450 MHz to 6000 MHz, and a frequency range corresponding to the FR 2 is 24250 MHz to 52600 MHz.

In S11 and S12, the first terminal device and the second terminal device can complete the unicast connection. Optionally, the first terminal device may further perform fine-granularity beam pairing in the following steps S13 to S16.

S13: The first terminal device sends a first reference signal to the second terminal device via a plurality of third to-be-selected beams.

Correspondingly, the second terminal device receives, from the first terminal device via a plurality of fourth to-be-selected beams, the first reference signal sent based on the plurality of third to-be-selected beams.

The first reference signal may be an SSB signal or a CSI-RS signal.

Before S13, the first terminal device may send configuration information to the second terminal device by using PC5-RRC information, where the configuration information may include a sending resource, a sending periodicity, and a feedback resource of the first reference signal, the identifier of the second terminal device, and the like.

The PC5-RRC information includes the sending resource, the sending periodicity, a sending interval, a feedback threshold (indicating a feedback threshold), the feedback resource, and the like of the first reference signal, and may further include the ID of the second terminal device. The configuration information included in the PC5-RRC information may be RRC information or SIB information sent by a first network device, or may be pre-configured information.

The first reference signal may be separately sent, that is, is not sent with a PSSCH. For example, the first reference signal is a CSI-RS, and the PC5-RRC information may include a CSI-RS set, a resource location, the sending periodicity, and the like.

Alternatively, the first reference signal may be sent along with a periodic PSSCH, for example, sent along with a periodic padding packet. The first terminal device may indicate a sending resource location and a feedback resource location of the first reference signal by using SCI information.

A resource for the first reference signal may be a specially configured resource, or may be a resource selected by the first terminal device from a pre-configured resource set.

After receiving the PC5-RRC information, the second terminal device may send PC5-RRC complete information to the first terminal device, to indicate that the second terminal device successfully receives the PC5-RRC information.

The configuration resource may be separately sent or sent with the PSSCH, that is, sent with data.

S14: The second terminal device measures the first reference signal, and determines a fourth beam.

When receiving the reference signal, the second terminal device may measure the first reference signal, and determine an optimal beam (the fourth beam) based on a measurement result.

S15: The second terminal device sends a measurement report of the first reference signal to the first terminal device.

Correspondingly, the first terminal device receives the measurement report from the second terminal device.

S 16: The first terminal device determines a third beam based on the measurement report.

The third beam is one of the plurality of third to-be-selected beams. The first terminal device may use, as the third beam based on the measurement report, the third to-be-selected beam corresponding to the first reference signal whose received quality meets a preset condition. For example, the first terminal device may use a beam whose received quality meets a threshold as the third beam, or may use a transmit beam with best received quality as the third beam.

In this way, when A₁<H₁, the first terminal device sends the DCR information to the second terminal device via the omnidirectional beam, to perform the unicast connection. Because the omnidirectional beam covers all directions or space, a unicast connection success rate can be improved, and a unicast connection failure caused by an excessively small quantity of determined available beams can be avoided.

When the DCR information may be sent via the omnidirectional beam, the DCR information may cover all surrounding space.

Operation 3: The first terminal device uses the plurality of beams in S510 as first to-be-selected beams, performs, with the second terminal device, the unicast connection to the second terminal device according to steps S1 to S4, and optionally, further continue to perform fine-granularity beam pairing according to S5 to S9.

In this way, when A₁<H₁, the first terminal device sends the DCR information via all beams for sending the third reference signal, to perform the unicast connection to the second terminal device, so as to avoid the unicast connection failure caused by a small quantity of determined available beams.

A process of determining A₁<H₁ or Aₙ<Hₙ may be completed by a physical layer or a MAC layer, and then it is determined to send the first request information (the DCR information) via the B₁ or Bₙ beams or the omnidirectional beam. If the determining process is completed by the physical layer, the physical layer of the first terminal device may report B₁ or Bₙ to the MAC layer, or report beams for sending the first request information (the DCR information) as the B₁ or Bₙ beams, so that the MAC layer determines a quantity of retransmission times (HARQ retransmission) of the first request information, or the MAC layer indicates the quantity of the first to-be-selected beams to a higher layer. When the unicast connection is subsequently performed, the higher layer may repeat or retransmit the first request information (the DCR information) for a corresponding quantity of times (PDCP repetition or PC5-S retransmission). If the physical layer determines to send the first request information via the omnidirectional beam, the physical layer may report, to the MAC layer, that the first request information is sent via the omnidirectional beam. Further, the MAC layer may report, to the higher layer, that the first request information is sent via the omnidirectional beam.

It should be understood that Operation 2 and Operation 3 do not necessarily need to be implemented when Ai<Hi. For example, after obtaining a resource configuration parameter that exceeds a preset threshold, the first terminal device may send the DCR information via the omnidirectional beam or the plurality of beams in S510, to perform the unicast connection to the second terminal device. For example, a first network device and the first terminal device may agree that after the first terminal device obtains resource configuration parameters three times, if A₃<H₃, then, the first terminal device may send the DCR information to the second terminal device via the omnidirectional beam or the plurality of beams in S510, to perform the unicast connection. Alternatively, after using up all resource configuration parameters in a resource configuration parameter list sent by the first network device to the first terminal device, the first terminal device may directly perform Operation 2 or Operation 3.

It should be further understood that, although it is described above that the first terminal device determines the first to-be-selected beam based on the first resource configuration parameter (or determines the first to-be-selected beam based on the n^{th} resource configuration parameter), in an actual case, the first terminal device does not necessarily have a determining step, but directly sends, based on a determining result via the Aₙ beams, the Bₙ beams, or the omnidirectional beam, the first request information to the second terminal device to which the connection needs to be established, to establish the unicast connection.

In addition, as described above, the first terminal device sends the third reference signal to obtain the available beam, and further determines, by comparing the quantity of available beams with a quantity threshold (an N^{th} quantity threshold) in the resource configuration parameter, the beam for the unicast connection to the second terminal device. In addition to that, the first terminal device may further determine the available beam in the following manner.

S21: The first terminal device receives, via a plurality of beams formed through beamforming, SSB signals sent by a plurality of terminal devices.

S22: The first terminal device determines the available beam based on received quality of the SSB signals.

It is assumed that a quantity of beams used by the first terminal device to receive the SSB signals is B₁, and a quantity of determined available beams is A₁. The first terminal device and a network device may agree that when the quantity of available beams is greater than or equal to a preset threshold, the first terminal device may send the DCR information via the available beams, to perform the unicast connection to the first terminal device. Alternatively, the first terminal device and the network device may agree that when a ratio of the quantity A₁ of available beams to the quantity B₁ of beams for receiving the SSB signals is greater than or equal to the preset threshold, the first terminal device may send the DCR information via the available beams, to perform the unicast connection to the first terminal device.

When A₁ is less than the preset threshold or A₁/B₁ is less than the preset threshold, the first terminal device may directly send the DCR information to the second terminal device via the omnidirectional beam or all the beams for receiving the SSB signals, to perform the unicast connection.

FIG. 7 is a schematic flowchart of a beam management method according to an embodiment of this application. The method is used to implement the technical solutions in FIG. 3 and FIG. 4.

S602: A first terminal device repeatedly sends first request information to a second terminal device via a plurality of first to-be-selected beams.

Correspondingly, the second terminal device receives the first request information from the first terminal device via a plurality of second to-be-selected beams.

In S602, the first request information includes DCR information, and the first terminal device triggers a connection to the second terminal device by using the DCR information. The first request information is sent by the first terminal device by using HARQ retransmission, PDCP repetition, or PC5-S retransmission based on the first to-be-selected beams in different directions, to form beam sweeping.

Before S602, the first terminal device may obtain the plurality of to-be-selected beams by using S510 to S530 in FIG. 6. For specific details, refer to corresponding descriptions in FIG. 6. Details are not described herein again.

Optionally, if an omnidirectional beam is used as a beam for a subsequent unicast connection according to steps S510 to S530 in FIG. 6, S602 is changed to: A first terminal device sends first request information to a second terminal device via the omnidirectional beam. Subsequent steps S603 and S608 are correspondingly removed. In steps S610 to S624, the first terminal device performs fine-granularity beam pairing based on the omnidirectional beam instead of a first beam. Details are not described herein again.

S603: The first terminal device sends a quantity of the first to-be-selected beams to the second terminal device.

Correspondingly, the second terminal device receives the quantity of first to-be-selected beams from the first terminal device.

S604: The second terminal device measures the first request information, and determines a second beam.

The second beam may be a beam with highest received quality in second to-be-selected beams or a beam whose received quality meets a first threshold.

S606: The second terminal device sends first feedback information to the first terminal device via the second beam.

Correspondingly, the first terminal device receives the first feedback information from the first terminal device via the plurality of first to-be-selected beams.

In S606, the first feedback information includes DCA information, and is feedback for the DCR information.

S608: The first terminal device measures the first feedback information, and determines a first beam.

Optionally, the first request information in S602 includes beam indication information of the first to-be-selected beam, and the first feedback information in S606 includes indication information of the first to-be-selected beam that carries the first request information and that corresponds to the second beam. The first terminal device may directly determine the first beam based on the indication information of the first to-be-selected beam, provided that the first terminal device successfully receives the first feedback information through blind sweeping.

S610: A first network device sends a resource configuration parameter to the first terminal device.

The resource configuration parameter may include relative sending time domain locations and feedback time domain locations of a plurality of CSI-RS reference signals relative to resource indication information.

The resource configuration parameter may be sent based on a request of the first terminal device.

S611: If there is no sending resource, the first terminal device obtains, from the first network device or by demodulating SCI information of another sidelink, a time-frequency resource or a space resource for the plurality of CSI-RS reference signals.

S612: The first terminal device sends relative resource indication information to the second terminal device, where the relative resource indication information includes the sending time domain locations and the feedback time domain locations of the plurality of CSI-RS reference signals.

S614: The first terminal device sends resource indication information to the second terminal device, to indicate receiving time-frequency resources or space resources of the plurality of CSI-RS reference signals.

S616: The first terminal device sends the plurality of CSI-RS reference signals to the second terminal device via a plurality of third to-be-selected beams.

Correspondingly, the second terminal device receives the plurality of CSI-RS reference signals at the sending time domain locations after the resource indication information based on the relative resource indication information.

S618: The second terminal device sends a CSI-RS measurement report to the first terminal device.

Correspondingly, the first terminal device receives the CSI-RS measurement report.

The measurement includes beam indication information used to indicate the third to-be-selected beam and corresponding received quality.

S620: The first terminal device determines a third beam from the third to-be-selected beams based on the CSI-RS measurement report.

S622: The first terminal device sends a CSI-RS signal to the second terminal device via the third beam.

Correspondingly, the second terminal device receives the CSI-RS signal via a plurality of fourth to-be-selected beams.

S624: The second terminal device determines a fourth beam from the plurality of fourth to-be-selected beams based on received quality.

FIG. 8 is a block diagram of a sidelink management apparatus according to an embodiment of this application.

In some embodiments, the apparatus includes: a transceiver unit 710, configured to repeatedly send first request information to a second terminal device via a plurality of first to-be-selected beams, where the first request information is used to trigger a connection to the second terminal device; and the transceiver unit 710 is further configured to receive first feedback information from the second terminal device via the plurality of first to-be-selected beams, and the first feedback information is used to provide feedback on the first request information; and a processing unit 720, where the processing unit 720 is configured to determine a first beam based on the first feedback information, and the first beam is one of the plurality of first to-be-selected beams.

In this embodiment of this application, the transceiver unit 710 in the apparatus repeatedly sends the first request information to the second terminal device via the plurality of first to-be-selected beams in different directions, to trigger the connection to the second terminal device, and enables the second terminal device to determine a beam with good received quality based on the first request information, and receive the first feedback information sent by the second terminal device. The processing unit 720 determines the first beam from the first to-be-selected beams based on the first feedback information, so that the first terminal device and the second terminal device can obtain transmit and receive beams with good communication quality. This improves sidelink communication quality.

Optionally, the processing unit 720 is specifically configured to perform one of the following operations: repeatedly sending the first request information to the second terminal device via the plurality of first to-be-selected beams by using a HARQ; repeatedly sending the first request information to the second terminal device via the plurality of first to-be-selected beams by using a PDCP; and repeatedly sending the first request information to the second terminal device via the plurality of first to-be-selected beams by using a PC5-S layer.

Optionally, the transceiver unit 710 is further configured to: send a quantity of the plurality of first to-be-selected beams to the second terminal device.

Optionally, the first request information further includes indication information of the first to-be-selected beam carrying the first request information, and the first feedback information further includes indication information of the first beam.

Optionally, received quality of the first feedback information corresponding to the first beam is greater than a first threshold.

Optionally, the received quality of the first feedback information corresponding to the first beam is highest in received quality of the first feedback information corresponding to the plurality of first to-be-selected beams.

Optionally, the transceiver unit 710 is further configured to: send resource indication information to the second terminal device, where the resource indication information indicates a dedicated resource for a first reference signal.

Optionally, the transceiver unit 710 is further configured to: send the first reference signal to the second terminal device based on the first beam and the dedicated resource via a plurality of third candidate beams; and receive a measurement report from the second terminal device, where the measurement report indicates received quality of the first reference signal and a corresponding third to-be-selected beam.

Optionally, the processing unit 720 is further configured to determine a third beam based on the measurement report, where the third beam is one of the plurality of third to-be-selected beams.

Optionally, the transceiver unit 720 is further configured to obtain the plurality of first to-be-selected beams.

Optionally, the transceiver unit 720 is specifically configured to: obtain an n^{th} resource configuration parameter, where the n^{th} resource configuration parameter includes an n^{th} quantity threshold Hₙ, and n is a positive integer; send a third reference signal based on the n^{th} resource configuration parameter via Bₙ beams; receive second feedback information from a plurality of terminal devices, where the second feedback information indicates Aₙ beams, the Aₙ beams belong to the Bₙ beams, and received quality of the Aₙ beams is greater than or equal to a received quality threshold; and determine the plurality of first to-be-selected beams based on a quantity relationship between Aₙ and Hₙ.

Optionally, the transceiver unit 720 is specifically configured to: when Aₙ≥Hₙ, determine the Aₙ beams as the plurality of first to-be-selected beams.

Optionally, the transceiver unit 720 is specifically configured to: when Aₙ<Hₙ, determine the Bₙ beams as the plurality of first to-be-selected beams.

Optionally, the transceiver unit 720 is specifically configured to: when Aₙ<Hₙ, the first terminal device obtains an (n+1)^{th} resource configuration parameter, and determines the plurality of first to-be-selected beams based on the (n+1)^{th} resource configuration parameter, where the n^{th} resource configuration parameter includes an n^{th} periodicity and/or an n^{th} resource, the (n+1)^{th} resource configuration parameter includes an (n+1)^{th} periodicity and/or an (n+1)^{th} resource, and the (n+1)^{th} resource configuration parameter meets at least one of the following: the (n+1)^{th} periodicity is shorter than the n^{th} periodicity; and the (n+1)^{th} resource is less than the n^{th} resource.

Optionally, that the first terminal device obtains the (n+1)^{th} resource configuration parameter includes: When Aₙ<Hₙ, the first terminal device sends request information to a first network device, where the request information is used to obtain the (n+1)^{th} resource configuration parameter; or the first terminal device obtains the (n+1)^{th} resource configuration parameter based on a resource configuration list, where the resource configuration list is received from the first network device when the first terminal device obtains a first resource configuration parameter; and the resource configuration list includes the n^{th} resource configuration parameter and the (n+1)^{th} resource configuration parameter.

Optionally, the plurality of terminal devices include the second terminal device.

In some other embodiments, the apparatus includes: a transceiver unit 710, configured to receive first request information from a first terminal device via a plurality of second to-be-selected beams, where the first request information is used to connect to the first terminal device; and a processing unit 720, configured to determine a second beam based on the first request information, where the second beam is one of the plurality of second to-be-selected beams; and the transceiver unit 710 is further configured to send first feedback information to the first terminal device via the second beam, where the first feedback information is used to provide feedback on the first request information.

The transceiver unit 710 receives the first request information from the first terminal device via the plurality of second to-be-selected beams. The processing unit 720 measures the first request information based on the first request information, and determines the second beam. The transceiver unit 710 sends the first feedback information to the first terminal device, so that the first terminal device can also determine, based on the first feedback information, a beam with good received quality. This improves sidelink communication quality.

Optionally, the first request information is sent by the first terminal device via a plurality of first to-be-selected beams, and the transceiver unit 710 is further configured to: receive a quantity of the plurality of first to-be-selected beams from the first terminal device, where the receiving first request information from a first terminal device via a plurality of second to-be-selected beams includes: receiving the first request information corresponding to the plurality of first to-be-selected beams from the first terminal device based on the quantity of the plurality of first to-be-selected beams via the plurality of second to-be-selected beams.

Optionally, the first request information further includes indication information of the first to-be-selected beam carrying the first request information, the first feedback information further includes indication information of a first beam, and the first beam is one of the plurality of first to-be-selected beams.

Optionally, received quality of the first request information corresponding to the second beam is greater than a second threshold.

Optionally, the received quality of the first request information corresponding to the second beam is highest in received quality of first request information corresponding to the plurality of second to-be-selected beams.

Optionally, the transceiver unit 710 is further configured to: receive resource indication information from the first terminal device, where the resource indication information indicates a dedicated resource.

Optionally, the transceiver unit 710 in the apparatus is further configured to: receive, from the first terminal device on the dedicated resource via the second beam, a first reference signal sent via a plurality of third to-be-selected beams; and send a measurement report to the first terminal device, where the measurement report indicates received quality of the first reference signal and a corresponding third to-be-selected beam.

Optionally, the transceiver unit 710 is further configured to: receive third reference signals carried on Bₙ beams of the first terminal device, where the Bₙ beams are determined by the first terminal device based on an n^{th} resource configuration parameter; and send feedback information to the first terminal device, where the feedback information indicates a beam whose received quality is greater than or equal to a received quality threshold in the Bₙ beams, and the plurality of first to-be-selected beams include a beam whose received quality is greater than or equal to the received quality threshold.

FIG. 9 is a block diagram of an apparatus according to an embodiment of this application.

The apparatus 800 shown in FIG. 9 may correspond to the apparatus described above. Specifically, the apparatus 800 may be a specific example of the first terminal device or the second terminal device in FIG. 1. The apparatus 800 includes a processor 820. In this embodiment of this application, the processor 820 is configured to implement a corresponding control and management operation. For example, the processor 820 is configured to support the apparatus in performing the methods, operations, or functions shown in FIG. 3, FIG. 4, FIG. 5, and FIG. 6 in the foregoing embodiments. Optionally, the apparatus 800 may further include a memory 810 and a communication interface 830. The processor 820, the communication interface 830, and the memory 810 may be connected to each other, or may be connected to each other through a bus 840. The communication interface 830 is configured to support the apparatus in performing communication, and the memory 810 is configured to store program code and data of the apparatus. The processor 820 invokes the code or the data stored in the memory 810 to implement a corresponding operation. The memory 810 may or may not be coupled to the processor. A coupling in embodiments of this application may be an indirect coupling or a communication connection between apparatuses, units, or modules in an electrical form, a mechanical form, or another form, and is for information exchange between the apparatuses, the units, or the modules.

The processor 820 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination including one or more microprocessors, or a combination of a digital signal processor and a microprocessor. The communication interface 830 may be a transceiver, a circuit, a bus, a module, or another type of communication interface. The bus 840 may be a peripheral component interconnect (peripheral component interconnect, PCI) bus, an extended industry standard architecture (extended industry standard architecture, EISA) bus, and the like. The bus may be classified into an address bus, a data bus, a control bus, and the like. For ease of representation, only one thick line is used to represent the bus in FIG. 9, but this does not mean that there is only one bus or only one type of bus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink management method, comprising:
repeatedly sending, by a first terminal device, first request information to a second terminal device via a plurality of first to-be-selected beams, wherein the first request information is used to trigger a connection to the second terminal device;
receiving, by the first terminal device, first feedback information from the second terminal device via the plurality of first to-be-selected beams, wherein the first feedback information is used to provide feedback on the first request information; and
determining, by the first terminal device, a first beam based on the first feedback information, wherein the first beam is one of the plurality of first to-be-selected beams.

2. The method according to claim 1, wherein the repeatedly sending, by a first terminal device, first request information to a second terminal device via a plurality of first to-be-selected beams comprises one of the following operations:
repeatedly sending, by the first terminal device, the first request information to the second terminal device via the plurality of first to-be-selected beams by using a hybrid automatic repeat request (hybrid automatic repeat request, HARQ);
repeatedly sending, by the first terminal device, the first request information to the second terminal device via the plurality of first to-be-selected beams by using a packet data convergence protocol (packet data convergence protocol, PDCP); and
repeatedly sending, by the first terminal device, the first request information to the second terminal device via the plurality of first to-be-selected beams by using a PC5-signaling protocol (PC5-signal, PC5-S) layer.

3. The method according to claim 1 or 2, wherein the method further comprises:
sending, by the first terminal device, a quantity of the plurality of first to-be-selected beams to the second terminal device.

4. The method according to any one of claims 1 to 3, wherein the first request information further comprises indication information of the first to-be-selected beam carrying the first request information, and the first feedback information further comprises indication information of the first beam.

5. The method according to any one of claims 1 to 4, wherein received quality of the first feedback information corresponding to the first beam is greater than a first threshold.

6. The method according to any one of claims 1 to 5, wherein the received quality of the first feedback information corresponding to the first beam is highest in received quality of the first feedback information corresponding to the plurality of first to-be-selected beams.

7. The method according to any one of claims 1 to 6, wherein the method further comprises:
sending, by the first terminal device, resource indication information to the second terminal device, wherein the resource indication information indicates a dedicated resource.

8. The method according to claim 7, wherein the method further comprises:
sending, by the first terminal device, a first reference signal to the second terminal device on the dedicated resource based on the first beam via a plurality of third to-be-selected beams; and
receiving, by the first terminal device, a measurement report from the second terminal device, wherein
the measurement report indicates received quality of the first reference signal and a corresponding third to-be-selected beam.

9. The method according to any one of claims 1 to 8, wherein before the repeatedly sending, by a first terminal device, first request information to a second terminal device via a plurality of first to-be-selected beams, the method further comprises:
obtaining, by the first terminal device, the plurality of first to-be-selected beams.

10. The method according to claim 9, wherein the obtaining, by the first terminal device, the plurality of first to-be-selected beams comprises:
obtaining, by the first terminal device, an n^{th} resource configuration parameter, wherein the n^{th} resource configuration parameter comprises an n^{th} quantity threshold Hₙ, and n is a positive integer;
sending, by the first terminal device, a third reference signal based on the n ^{th} resource configuration parameter via Bₙ beams;
receiving, by the first terminal device, second feedback information from a plurality of terminal devices, wherein the second feedback information indicates Aₙ beams, the Aₙ beams belong to the Bₙ beams, and received quality of the Aₙ beams is greater than or equal to a received quality threshold; and
determining, by the first terminal device, the plurality of first to-be-selected beams based on a quantity relationship between Aₙ and Hₙ.

11. The method according to claim 10, wherein the determining, by the first terminal device, the plurality of first to-be-selected beams based on a quantity relationship between Aₙ and Hₙ comprises:
when Aₙ≥Hₙ, determining the Aₙ beams as the plurality of first to-be-selected beams.

12. The method according to claim 10, wherein the determining, by the first terminal device, the plurality of first to-be-selected beams based on a quantity relationship between Aₙ and Hₙ comprises:
when Aₙ<Hₙ, determining the Bₙ beams as the plurality of first to-be-selected beams.

13. The method according to claim 10, wherein the determining, by the first terminal device, the plurality of first to-be-selected beams based on a quantity relationship between Aₙ and Hₙ comprises:
when Aₙ<Hₙ, obtaining, by the first terminal device, an (n+1)^{th} resource configuration parameter, and determining the plurality of first to-be-selected beams based on the (n+1)^{th} resource configuration parameter, wherein the n^{th} resource configuration parameter comprises an n^{th} periodicity, an n^{th} interval, and an n^{th} resource, the (n+1)^{th} resource configuration parameter comprises an (n+1)^{th} periodicity, an (n+1)^{th} interval, and an (n+1)^{th} resource, the n^{th} periodicity, the n^{th} interval, and the n^{th} resource are respectively a sending periodicity of the third reference signal, a sending interval of the third reference signal in one sending periodicity, and a sending resource of the third reference signal that are configured in the n^{th} resource configuration parameter, the (n+1)^{th} periodicity, the (n+1)^{th} interval, and the (n+1)^{th} resource are respectively a sending periodicity of the third reference signal, a sending interval of the third reference signal in one sending periodicity, and a sending resource of the third reference signal that are configured in the (n+1)^{th} resource configuration parameter, and the (n+1)^{th} resource configuration parameter meets at least one of the following:
the (n+1)^{th} periodicity is shorter than the n^{th} periodicity;
the (n+1)^{th} interval is shorter than the n^{th} interval; and
the (n+1)^{th} resource is less than the n^{th} resource.

14. The method according to claim 13, wherein the obtaining, by the first terminal device, an (n+1)^{th} resource configuration parameter comprises:
when Aₙ<Hₙ, sending, by the first terminal device, request information to a first network device, wherein the request information is used to obtain the (n+1)^{th} resource configuration parameter; and receiving, by the first terminal device, the (n+1)^{th} resource configuration parameter from the first network device; or
obtaining, by the first terminal device, the (n+1)^{th} resource configuration parameter from a resource configuration list received from the first network device, wherein the resource configuration list comprises the n^{th} resource configuration parameter and the (n+1)^{th} resource configuration parameter.

15. The method according to any one of claims 10 to 14, wherein the plurality of terminal devices comprise the second terminal device.

16. A sidelink management method, comprising:
obtaining, by a first terminal device, an n^{th} resource configuration parameter, wherein the n^{th} resource configuration parameter comprises an n^{th} quantity threshold Hₙ;
sending, by the first terminal device, a third reference signal to a plurality of terminal devices based on the n^{th} resource configuration parameter via Bₙ beams;
receiving, by the first terminal device, second feedback information from the plurality of terminal devices, wherein the second feedback information indicates Aₙ beams, the Aₙ beams belong to the Bₙ beams, and received quality of the Aₙ beams is greater than or equal to a received quality threshold;
determining, by the first terminal device, the Aₙ beams based on the second feedback information, wherein the Aₙ beams belong to the Bₙ beams, and the received quality of the Aₙ beams is greater than or equal to the received quality threshold; and
when Aₙ<Hₙ, repeatedly sending, by the first terminal device, first request information to a second terminal device via an omnidirectional beam, wherein the first request information is used to trigger a connection to the second terminal device.

17. A sidelink management method, comprising:
receiving, by a second terminal device, first request information from a first terminal device via a plurality of second to-be-selected beams, wherein the first request information is used by the first terminal device to trigger a connection to the second terminal device;
determining, by the second terminal device, a second beam based on the first request information, wherein the second beam is one of the plurality of second to-be-selected beams; and
sending, by the second terminal device, first feedback information to the first terminal device via the second beam, wherein the first feedback information is used to provide feedback on the first request information.

18. The method according to claim 17, wherein the first request information is sent by the first terminal device via a plurality of first to-be-selected beams, and the method further comprises:
receiving, by the second terminal device, a quantity of the plurality of first to-be-selected beams from the first terminal device; and
the receiving, by a second terminal device, first request information from a first terminal device via a plurality of second to-be-selected beams comprises:
receiving, by the second terminal device, the first request information corresponding to the plurality of first to-be-selected beams from the first terminal device based on the quantity of the plurality of first to-be-selected beams via the plurality of second to-be-selected beams.

19. The method according to claim 17 or 18, wherein the first request information further comprises indication information of the first to-be-selected beam carrying the first request information, the first feedback information further comprises indication information of a first beam, and the first beam is one of the plurality of first to-be-selected beams.

20. The method according to any one of claims 17 to 19, wherein the method further comprises:
receiving, by the second terminal device, resource indication information from the first terminal device, wherein the resource indication information indicates a dedicated resource.

21. The method according to claim 20, wherein the method further comprises:
receiving, by the second terminal device from the first terminal device on the dedicated resource via the second beam, a first reference signal sent via a plurality of third to-be-selected beams; and
sending, by the second terminal device, a measurement report to the first terminal device, wherein
the measurement report indicates received quality of the first reference signal and a corresponding third to-be-selected beam.

22. A sidelink management apparatus, comprising:
a transceiver unit, configured to repeatedly send first request information to a second terminal device via a plurality of first to-be-selected beams, wherein the first request information is used to trigger a connection to the second terminal device, wherein
the transceiver unit is further configured to receive first feedback information from the second terminal device via the plurality of first to-be-selected beams, wherein the first feedback information is used to provide feedback on the first request information; and
a processing unit, configured to determine a first beam based on the first feedback information, wherein the first beam is one of the plurality of first to-be-selected beams.

23. The apparatus according to claim 22, wherein the processing unit is specifically configured to perform one of the following operations:
repeatedly sending the first request information to the second terminal device via the plurality of first to-be-selected beams by using a hybrid automatic repeat request (hybrid automatic repeat request, HARQ);
repeatedly sending the first request information to the second terminal device via the plurality of first to-be-selected beams by using a packet data convergence protocol (packet data convergence protocol, PDCP); and
repeatedly sending the first request information to the second terminal device via the plurality of first to-be-selected beams by using a PC5-signaling protocol (PC5-signal, PC5-S) layer.

24. The apparatus according to claim 22 or 23, wherein the transceiver unit is further configured to:
send resource indication information to the second terminal device, wherein the resource indication information indicates a dedicated resource.

25. The apparatus according to claim 24, wherein the transceiver unit is further configured to:
send a first reference signal to the second terminal device on the dedicated resource based on the first beam via a plurality of third to-be-selected beams; and
receive a measurement report from the second terminal device, wherein
the measurement report indicates received quality of the first reference signal and a corresponding third to-be-selected beam.

26. The apparatus according to any one of claims 22 to 25, wherein the processing unit is further configured to:
obtain the plurality of first to-be-selected beams.

27. The apparatus according to claim 26, wherein the processing unit is specifically configured to:
obtain an n^{th} resource configuration parameter, wherein the n^{th} resource configuration parameter comprises an n^{th} quantity threshold Hₙ, and n is a positive integer;
send a third reference signal based on the n^{th} resource configuration parameter via Bₙ beams;
receive second feedback information from a plurality of terminal devices, wherein the second feedback information indicates Aₙ beams, the Aₙ beams belong to the Bₙ beams, and received quality of the Aₙ beams is greater than or equal to a received quality threshold; and
determine the plurality of first to-be-selected beams based on a quantity relationship between Aₙ and Hₙ.

28. The apparatus according to claim 27, wherein the processing unit is specifically configured to:
when Aₙ≥Hₙ, determine the Aₙ beams as the plurality of first to-be-selected beams.

29. The apparatus according to claim 27, wherein the processing unit is specifically configured to:
when Aₙ<Hₙ, determine the Bₙ beams as the plurality of first to-be-selected beams.

30. The apparatus according to claim 27, wherein the processing unit is specifically configured to:
when Aₙ<Hₙ, obtain, by the first terminal device, an (n+1)^{th} resource configuration parameter, and determine the plurality of first to-be-selected beams based on the (n+1)^{th} resource configuration parameter, wherein the n^{th} resource configuration parameter comprises at least one of an n^{th} periodicity, an n^{th} interval, and an n^{th} resource, the (n+1)^{th} resource configuration parameter comprises at least one of an (n+1)^{th} periodicity, an (n+1)^{th} interval, and an (n+1)^{th} resource, the n^{th} periodicity, the n^{th} interval, and the n^{th} resource are respectively a sending periodicity of the third reference signal, a sending interval of the third reference signal in one sending periodicity, and a sending resource of the third reference signal that are configured in the n^{th} resource configuration parameter, the (n+1)^{th} periodicity, the (n+1)^{th} interval, and the (n+1)^{th} resource are respectively a sending periodicity of the third reference signal, a sending interval of the third reference signal in one sending periodicity, and a sending resource of the third reference signal that are configured in the (n+1)^{th} resource configuration parameter, and the (n+1)^{th} resource configuration parameter meets at least one of the following:
the (n+1)^{th} periodicity is shorter than the n^{th} periodicity;
the (n+1)^{th} interval is shorter than the n^{th} interval; and
the (n+1)^{th} resource is less than the n^{th} resource.

31. The apparatus according to claim 30, wherein the processing unit is specifically configured to:
when Aₙ<Hₙ, send request information to a first network device, wherein the request information is used to obtain the (n+1)^{th} resource configuration parameter; and receive the (n+1)^{th} resource configuration parameter from the first network device; or
obtain the (n+1)^{th} resource configuration parameter from a resource configuration list received from the first network device, wherein the resource configuration list is received from the first network device when the first terminal device obtains a first resource configuration parameter, and the resource configuration list comprises the n^{th} resource configuration parameter and the (n+1)^{th} resource configuration parameter.

32. The apparatus according to any one of claims 27 to 31, wherein the plurality of terminal devices comprise the second terminal device.

33. A sidelink management apparatus, comprising:
a transceiver unit, configured to receive first request information from a first terminal device via a plurality of second to-be-selected beams, wherein the first request information is used by the first terminal device to trigger a connection to the apparatus; and
a processing unit, configured to determine a second beam based on the first request information, wherein the second beam is one of the plurality of second to-be-selected beams, wherein
the transceiver unit is further configured to send first feedback information to the first terminal device via the second beam, wherein the first feedback information is used to provide feedback on the first request information.

34. The apparatus according to claim 33, wherein the transceiver unit is further configured to:
receive resource indication information from the first terminal device, wherein the resource indication information indicates a dedicated resource.

35. The apparatus according to claim 34, wherein the transceiver unit in the apparatus is further configured to:
receive, from the first terminal device on the dedicated resource via the second beam, a first reference signal sent via a plurality of third to-be-selected beams; and
send a measurement report to the first terminal device, wherein
the measurement report indicates received quality of the first reference signal and a corresponding third to-be-selected beam.

36. A communication apparatus, comprising:
a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 15, claim 16, or any one of claims 17 to 21 by using a logic circuit or by executing code instructions.

37. A communication system, comprising:
the apparatus according to any one of claims 22 to 32; and/or
the apparatus according to any one of claims 33 to 35.

38. A chip, comprising a processor, configured to invoke a computer program from a memory and run the computer program, to enable a terminal device in which the chip is installed to perform the method according to any one of claims 1 to 15, the method according to claim 16, and/or the method according to any one of claims 17 to 21.

39. A computer-readable storage medium, wherein
the computer-readable storage medium stores a computer program, and when the computer program is run, a computer is enabled to perform the method according to any one of claims 1 to 15, the method according to claim 16, or the method according to any one of claims 17 to 21.

40. A computer program product, wherein the computer program product comprises computer program code, and when the computer program code is run, the method according to any one of claims 1 to 15, the method according to claim 16, or the method according to any one of claims 17 to 21 is implemented.
